(19) Europäisches Patentamt
European Patent Office
Office européen des brevets

(11) **EP 4 450 150 A1**

(12) **EUROPEAN PATENT APPLICATION**
published in accordance with Art. 153(4) EPC

(43) Date of publication:
**23.10.2024 Bulletin 2024/43**

(21) Application number: **22907330.9**

(22) Date of filing: **07.12.2022**

(51) International Patent Classification (IPC):
***B01D 71/64*** *(2006.01)* ***B01D 53/22*** *(2006.01)*
***B01D 69/12*** *(2006.01)*

(52) Cooperative Patent Classification (CPC):
**B01D 53/22; B01D 69/12; B01D 71/64;** Y02C 20/40

(86) International application number:
**PCT/JP2022/045199**

(87) International publication number:
**WO 2023/112803 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2021 JP 2021202818**
**13.09.2022 JP 2022145670**
**11.11.2022 JP 2022181049**

(71) Applicant: **NITTO DENKO CORPORATION**
**Ibaraki-shi**
**Osaka 567-8680 (JP)**

(72) Inventors:
- **SHIMIZU, Hisae**
  **Ibaraki-shi**
  **Osaka 567-8680 (JP)**
- **ITO, Yuri**
  **Ibaraki-shi**
  **Osaka 567-8680 (JP)**
- **SAYAMA, Shunsuke**
  **Ibaraki-shi**
  **Osaka 567-8680 (JP)**
- **TANI, Kensuke**
  **Ibaraki-shi**
  **Osaka 567-8680 (JP)**
- **IHARA, Terukazu**
  **Ibaraki-shi**
  **Osaka 567-8680 (JP)**

(74) Representative: **Hoffmann Eitle**
**Patent- und Rechtsanwälte PartmbB**
**Arabellastraße 30**
**81925 München (DE)**

# (54) SEPARATION FUNCTIONAL LAYER, SEPARATION MEMBRANE, AND METHOD FOR PRODUCING SEPARATION FUNCTIONAL LAYER

(57) The present invention provides a new separation functional layer suitable for separating an acid gas from a gas mixture containing the acid gas. A separation functional layer 1 of the present invention includes polyimide P. The polyimide P includes a structural unit A1 derived from a tetracarboxylic dianhydride a1 having a six-membered ring acid anhydride structure, and a structural unit B1 derived from diamine b1. At least one of the structural unit A1 and the structural unit B1 has at least one functional group F selected from the group consisting of a carboxyl group, a hydroxyl group, a thiol group, and metal salts of these groups.

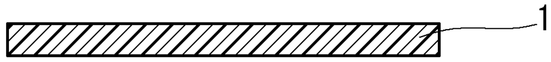


FIG.1

EP 4 450 150 A1

## Description

TECHNICAL FIELD

The present invention relates to a separation functional layer, a separation membrane, and a method for manufacturing a separation functional layer.

BACKGROUND ART

A membrane separation method has been developed as a method for separating an acid gas such as carbon dioxide from a gas mixture containing the acid gas. The membrane separation method allows an efficient separation of an acid gas with a suppressed operation cost, compared with an absorption method according to which an acid gas contained in a gas mixture is absorbed by an absorbent to be separated.

Separation membranes used in the membrane separation method include a composite membrane in which a separation functional layer is formed on a porous support member. Examples of a material of the separation functional layer include a resin such as a polyimide resin or a polyether block amide resin. For example, Patent Literature 1 discloses a separation membrane including a polyimide resin.

CITATION LIST

Patent Literature

JP 2014-184424 A

SUMMARY OF INVENTION

Technical Problem

There is required a new separation functional layer suitable for separating an acid gas from a gas mixture containing the acid gas.

Solution to Problem

The present invention provides a separation functional layer including polyimide P, wherein

the polyimide P includes
a structural unit A1 derived from a tetracarboxylic dianhydride a1 having a six-membered ring acid anhydride structure, and
a structural unit B1 derived from diamine b1, and
at least one of the structural unit A1 and the structural unit B1 has at least one functional group F selected from the group consisting of a carboxyl group, a hydroxyl group, a thiol group, and metal salts of these groups.

The present invention further provides a separation membrane including:

the above-mentioned separation functional layer; and
a porous support member supporting the separation functional layer.

The present invention further provides a method for manufacturing a separation functional layer including polyimide P, including

forming the separation functional layer by applying a coating liquid containing a material of the separation functional layer onto a base material and drying the coating liquid, wherein
the polyimide P includes a structural unit A1 derived from a tetracarboxylic dianhydride a1 having a six-membered ring acid anhydride structure, and a structural unit B1 derived from diamine b1, and
at least one of the structural unit A1 and the structural unit B1 has at least one functional group F selected from the group consisting of a carboxyl group, a hydroxyl group, a thiol group, and metal salts of these groups.

Advantageous Effects of Invention

The present invention makes it possible to provide a new separation functional layer suitable for separating an acid gas from a gas mixture containing the acid gas.

BRIEF DESCRIPTION OF DRAWINGS

FIG. 1 is a cross-sectional view of a separation functional layer according to an embodiment of the present invention.
FIG. 2 is a cross-sectional view of a separation membrane according to an embodiment of the present invention.
FIG. 3 is a schematic cross-sectional view of a membrane separation device including the separation membrane of the present invention.
FIG. 4 is a perspective view schematically showing a modification of the membrane separation device including the separation membrane of the present invention.
FIG. 5 is a graph showing a relationship between a permeation coefficient C1 and a separation factor α1 as for separation functional layers of Examples 1 to 21.

DESCRIPTION OF EMBODIMENTS

A separation functional layer according to a first aspect of the present invention is a separation functional layer including polyimide P, wherein

the polyimide P includes
a structural unit A1 derived from a tetracarboxylic dianhydride a1 having a six-membered ring acid anhydride structure, and
a structural unit B1 derived from diamine b1, and
at least one of the structural unit A1 and the structural unit B1 has at least one functional group F selected from the group consisting of a carboxyl group, a hydroxyl group, a thiol group, and metal salts of these groups.

According to a second aspect of the present invention, for example, in the separation functional layer according to the first aspect, at least one of the structural unit A1 and the structural unit B1 includes the metal salt of the carboxyl group as the functional group F.
According to a third aspect of the present invention, for example, in the separation functional layer according to the first or second aspect, a metal included in the metal salt has a valence of 2 or 3.
According to a fourth aspect of the present invention, for example, in the separation functional layer according to any one of the first to third aspects, the metal salt is an aluminum salt.
According to a fifth aspect of the present invention, for example, in the separation functional layer according to any one of the first to fourth aspects, the structural unit B1 has the functional group F.
According to a sixth aspect of the present invention, for example, in the separation functional layer according to the fifth aspect, a ratio of an amount of substance of the structural unit B1 having the functional group F with respect to an amount of substance of all structural units B derived from diamine is 3 to 25 mol% in the polyimide P.
According to a seventh aspect of the present invention, for example, in the separation functional layer according to the fifth or sixth aspect, the diamine b1 includes an aromatic ring.
According to an eighth aspect of the present invention, for example, in the separation functional layer according to any one of the fifth to seventh aspects, the structural unit B1 is represented by formula (B1), formula (B2), or formula (B3) below.

[Chemical Formula 1]

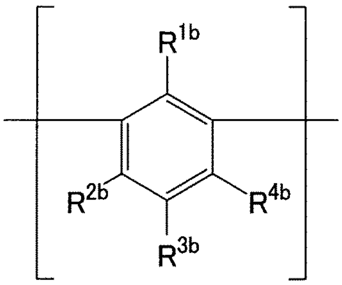

(B1)

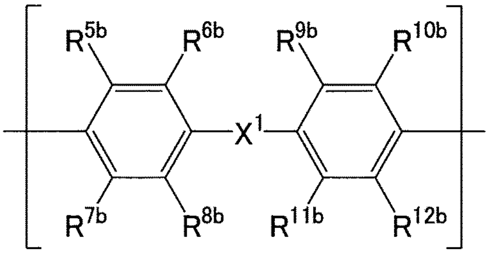

(B2)

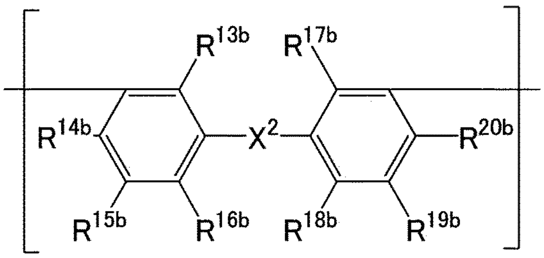

(B3)

In the formula (B1), $R^{1b}$ to $R^{4b}$ are each independently a hydrogen atom or an optional substituent. At least one selected from the group consisting of $R^{1b}$ to $R^{4b}$ is a group including the functional group F.

In the formula (B2), $R^{5b}$ to $R^{12b}$ are each independently a hydrogen atom or an optional substituent, and $X^1$ is a single bond or an optional linking group. At least one selected from the group consisting of $R^{5b}$ to $R^{12b}$ is a group including the functional group F.

In the formula (B3), $R^{13b}$ to $R^{20b}$ are each independently a hydrogen atom or an optional substituent, and $X^2$ is a single bond or an optional linking group. At least one selected from the group consisting of $R^{13b}$ to $R^{20b}$ is a group including the functional group F.

According to a ninth aspect of the present invention, for example, in the separation functional layer according to any one of the fifth to eighth aspects, the polyimide P further includes a structural unit B2 derived from diamine b2 having a sulfonyl group.

According to a tenth aspect of the present invention, for example, in the separation functional layer according to the ninth aspect, the structural unit B2 is represented by formula (C1) below.

[Chemical Formula 2]

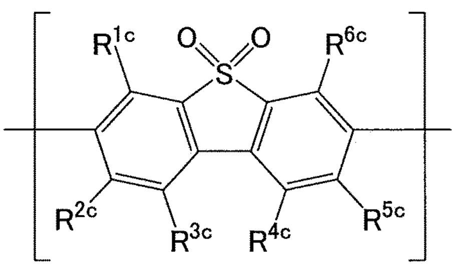

(C1)

In the formula (C1), $R^{1c}$ to $R^{6c}$ are each independently a hydrogen atom or an optional substituent.

According to an eleventh aspect of the present invention, for example, in the separation functional layer according to any one of the first to tenth aspects, the tetracarboxylic dianhydride a1 has a fused ring.

According to a twelfth aspect of the present invention, for example, in the separation functional layer according to any one of the first to eleventh aspects, the structural unit A1 is represented by formula (A1) below.

[Chemical Formula 3]

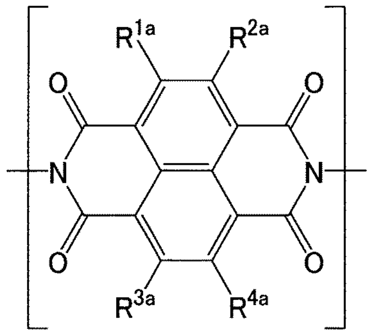

(A1)

In the formula (A1), $R^{1a}$ to $R^{4a}$ are each independently a hydrogen atom or an optional substituent.

According to a thirteenth aspect of the present invention, for example, in the separation functional layer according to any one of the first to twelfth aspects, when a gas mixture composed of carbon dioxide and methane is supplied to a space adjacent to one surface of the separation functional layer while a space adjacent to another surface of the separation functional layer is decompressed, a permeation coefficient of carbon dioxide permeating through the separation functional layer is 1000 Barrer or more, and

a concentration of the carbon dioxide in the gas mixture is 50 vol% under a standard condition, the gas mixture supplied to the space adjacent to the one surface has a temperature of 30°C and a pressure of 0.1 MPa, and the space adjacent to the other surface is decompressed in such a manner that a pressure in the space is lower than an atmospheric pressure in a measurement environment by 0.1 MPa.

According to a fourteenth aspect of the present invention, for example, in the separation functional layer according to any one of the first to thirteenth aspects, when a gas mixture composed of carbon dioxide and methane is supplied to a space adjacent to one surface of the separation functional layer while a space adjacent to another surface of the separation functional layer is decompressed, a separation factor $\alpha$ of the separation functional layer for carbon dioxide with respect to methane is 30 or more, and

a concentration of the carbon dioxide in the gas mixture is 50 vol% under a standard condition, the gas mixture supplied to the space adjacent to the one surface has a temperature of 30°C and a pressure of 0.1 MPa, and the space adjacent to the other surface is decompressed in such a manner that a pressure in the space is lower than an atmospheric pressure in a measurement environment by 0.1 MPa.

According to a fifteenth aspect of the present invention, for example, the separation functional layer according to any one of the first to fourteenth aspects is for use in separating carbon dioxide from a gas mixture containing carbon dioxide and at least one selected from the group consisting of methane and nitrogen.

A separation membrane according to a sixteenth aspect of the present invention includes:

the separation functional layer according to any one of the first to fifteenth aspects; and
a porous support member supporting the separation functional layer.

A manufacturing method according to a seventeenth aspect of the present invention is a method for manufacturing a separation functional layer including polyimide P, including

forming the separation functional layer by applying a coating liquid containing a material of the separation functional layer onto a base material and drying the coating liquid, wherein
the polyimide P includes a structural unit A1 derived from a tetracarboxylic dianhydride a1 having a six-membered ring acid anhydride structure, and a structural unit B1 derived from diamine b1, and
at least one of the structural unit A1 and the structural unit B1 has at least one functional group F selected from the group consisting of a carboxyl group, a hydroxyl group, a thiol group, and metal salts of these groups.

According to an eighteenth aspect of the present invention, for example, in the manufacturing method according to the seventeenth aspect, at least one of the structural unit A1 and the structural unit B1 has the metal salt.

According to a nineteenth aspect of the present invention, for example, in the manufacturing method according to the eighteenth aspect, the coating liquid contains, as the material of the separation functional layer, polyimide Q having

at least one functional group f selected from the group consisting of a carboxyl group, a hydroxyl group, and a thiol group, and a compound having a metal, and the polyimide P is formed from the polyimide Q at the time of forming the separation functional layer.

According to a twentieth aspect of the present invention, for example, in the manufacturing method according to the nineteenth aspect, the compound includes a metal complex having the metal and a ligand coordinated with the metal.

Hereinafter, the present invention will be described in detail. The following description is not intended to limit the present invention to a specific embodiment.

<Embodiment of separation functional layer>

FIG. 1 is a cross-sectional view of a separation functional layer 1 of the present embodiment. The separation functional layer 1 of FIG. 1 can function as a self-supporting membrane (single-layer membrane). The separation functional layer 1 is, for example, capable of allowing an acid gas contained in a gas mixture to preferentially permeate therethrough. The separation functional layer 1 is typically a dense layer (nonporous layer) in which no pores can be found when observed with a scanning electron microscope (SEM) at a magnification of 5000.

The separation functional layer 1 includes polyimide P. The polyimide P includes a structural unit A1 derived from a tetracarboxylic dianhydride a1 having a six-membered ring acid anhydride structure, and a structural unit B1 derived from diamine b1. At least one of the structural unit A1 and the structural unit B1 has at least one functional group F selected from the group consisting of a carboxyl group, a hydroxyl group, a thiol group, and metal salts of these groups. At least one of the structural unit A1 and the structural unit B1 preferably includes the metal salt (particularly the metal salt of the carboxyl group) as the functional group F. In the polyimide P, the structural unit B1 preferably has the functional group F. The structural unit A1 may or may not have the functional group F.

The structural unit A1 derived from the tetracarboxylic dianhydride a1 is a structural unit suitable for improving the permeation coefficient and permeation rate of an acid gas permeating through the separation functional layer 1. The tetracarboxylic dianhydride a1 has, for example, one or more, preferably two acid anhydride structures S. The six-membered ring acid anhydride structure S is typically a glutaric anhydride structure represented by formula (1) below.

[Chemical Formula 4]

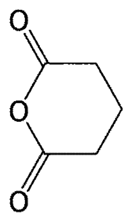

(1)

The tetracarboxylic dianhydride a1 may further have at least one functional group f selected from the group consisting of a carboxyl group, a hydroxyl group, and a thiol group, or may not have the functional group f. Note that in the present description, the functional group f is the same as the functional group F except that the metal salts are not included in its options.

The tetracarboxylic dianhydride a1 may have a fused ring, and the fused ring may include the acid anhydride structure S. The fused ring may include an aromatic ring in addition to the acid anhydride structure S. The aromatic ring included in the fused ring may be composed only of carbon atoms, or may be a heteroaromatic ring including a hetero atom such as an oxygen atom, a nitrogen atom, or a sulfur atom. The aromatic ring may be polycyclic or monocyclic. The number of carbon atoms in the aromatic ring is, for example, but not particularly limited to, 4 to 14. Specific examples of the aromatic ring include a benzene ring, a naphthalene ring, an anthracene ring, a phenanthrene ring, a furan ring, a pyrrole ring, a pyridine ring, and a thiophene ring.

The fused ring may or may not have a substituent. The substituent of the fused ring is not particularly limited, and examples thereof include a halogen group and a hydrocarbon group. Examples of the halogen group include a fluoro group, a chloro group, a bromo group, and an iodine group. The number of carbon atoms in the hydrocarbon group is, for example, but not particularly limited to, 1 to 15. Examples of the hydrocarbon group include an alkyl group such as a methyl group, an ethyl group, or a propyl group. The hydrocarbon group may be a halogenated hydrocarbon group in which a hydrogen atom has been substituted by a halogen group. In the case where the fused ring has a plurality of substituents, the substituents may be identical to or different from each other.

The tetracarboxylic dianhydride a1 is represented by formula (a1) below, for example.

[Chemical Formula 5]

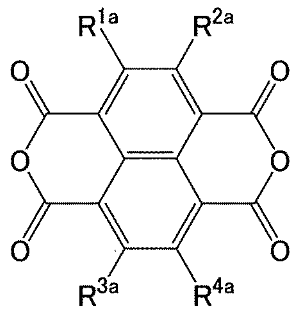

(a1)

In the formula (a1), $R^{1a}$ to $R^{4a}$ are each independently a hydrogen atom or an optional substituent. The optional substituent is not particularly limited, and examples thereof include a halogen group and a hydrocarbon group. As the halogen group and the hydrocarbon group, those stated above can be mentioned.

In the polyimide P, the structural unit A1 derived from the tetracarboxylic dianhydride a1 is represented by formula (A1) below, for example. The structural unit A1 represented by the formula (A1) is derived from the tetracarboxylic dianhydride a1 represented by the above-mentioned formula (a1). Note that in the formula (A1), a nitrogen atom included in an imide group is derived from diamine that has reacted with the tetracarboxylic dianhydride a1.

[Chemical Formula 6]

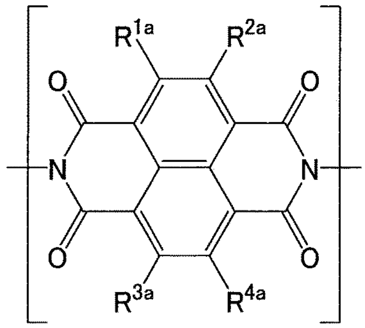

(A1)

In the formula (A1), $R^{1a}$ to $R^{4a}$ are the same as in the formula (a1) and each independently a hydrogen atom or an optional substituent. As a specific example of the structural unit A1 represented by the formula (A1), formula (A1-1) below can be mentioned.

[Chemical Formula 7]

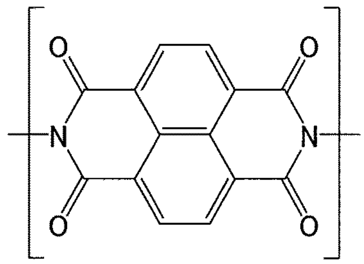

(A1-1)

In the polyimide (P), a ratio p1 of an amount of substance of the above-mentioned structural unit A1 with respect to an amount of substance of all structural units A derived from a tetracarboxylic dianhydride is, for example, 50 mol% or more, and may be 70 mol% or more, 90 mol% or more, 95 mol% or more, or even 99 mol% or more. The polyimide P may only include the above-mentioned structural unit A1 as the structural unit A derived from the tetracarboxylic

dianhydride. Note that the polyimide P may further include, besides the structural unit A1, a structural unit A2 derived from a tetracarboxylic dianhydride a2 having a five-membered ring acid anhydride structure. The tetracarboxylic dianhydride a2 is not particularly limited, and examples thereof include pyromellitic dianhydride and 4,4'-(hexafluoroisopropylidene)diphthalic anhydride.

The structural unit B1 derived from the diamine b1, especially the structural unit B1 having the functional group F, is a structural unit suitable for improving the selectivity for the acid gas permeating through the separation functional layer 1. The diamine b1 is a compound that has two primary amino groups and further has, for example, at least one functional group f selected from the group consisting of a carboxyl group, a hydroxyl group, and a thiol group. The number of the functional groups f in the diamine b1 is, for example, but not particularly limited to, 5 or less, and preferably 2 or less, and particularly preferably 1. The smaller the number of the functional groups f in the diamine b1 is, the more the solubility of the polyimide P tends to be improved and the more easily a desirable method for manufacturing the separation functional layer 1 tends to be adopted.

The above-mentioned functional group f has a dissociative proton and can form a salt with a counter cation. Particularly, from the viewpoint of forming a salt easily, it is preferable that the diamine b1 have a carboxyl group as the functional group f. Note that it is preferable for the diamine b1 not to have a group having a dissociative proton, such as a sulfonic acid group, other than the functional group f. In one example, when the diamine b1 does not include a sulfonic acid group, it is easy to adjust the solubility of the polyimide P properly.

The diamine b1 may further have an aromatic ring. As the aromatic ring, those stated above for the tetracarboxylic dianhydride a1 can be mentioned. In the diamine b1, a substituent of the aromatic ring includes, for example, at least one selected from the group consisting of the functional group f and a primary amino group. The aromatic ring may or may not have an additional substituent other than the substituent including the functional group f and the substituent including the primary amino group. The additional substituent is not particularly limited, and examples thereof include a halogen group and a hydrocarbon group. As the halogen group and the hydrocarbon group, those stated above for the tetracarboxylic dianhydride a1 can be mentioned. Note that in the diamine b1, the additional substituent may include a photopolymerizable functional group (such as a vinyl group).

The diamine b1 is represented by formula (b1), formula (b2), or formula (b3) below, for example.

[Chemical Formula 8]

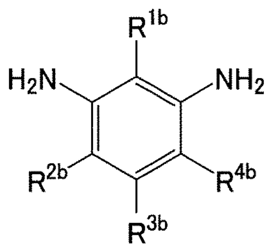

(b1)

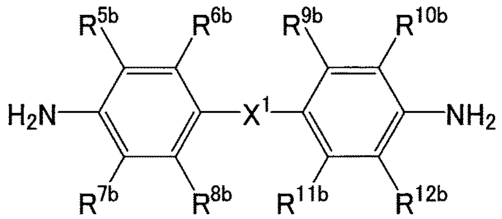

(b2)

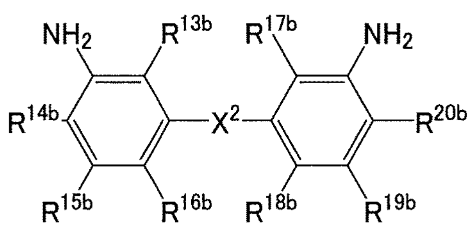

(b3)

In the formula (b1), $R^{1b}$ to $R^{4b}$ are each independently a hydrogen atom or an optional substituent. Note that at least one selected from the group consisting of $R^{1b}$ to $R^{4b}$ is a group including the functional group f, and is preferably the functional group f itself. The optional substituent other than the group including the functional group f is not particularly limited, and examples thereof include a halogen group and a hydrocarbon group. As the halogen group and the hydrocarbon group, those stated above for the tetracarboxylic dianhydride a1 can be mentioned.

In the formula (b2), $R^{5b}$ to $R^{12b}$ are each independently a hydrogen atom or an optional substituent, and $X^1$ is a single bond or an optional linking group. Note that at least one selected from the group consisting of $R^{5b}$ to $R^{12b}$ is a group including the functional group f, and is preferably the functional group f itself. The optional substituent other than the group including the functional group f is not particularly limited, and examples thereof include a halogen group and a hydrocarbon group. As the halogen group and the hydrocarbon group, those stated above for the tetracarboxylic dianhydride a1 can be mentioned.

In $X^1$ of the formula (b2), the optional linking group is a divalent hydrocarbon group, for example. Examples of the divalent hydrocarbon group include an alkylene group such as a methylene group, an ethylene group, a propane-1 ,3-diyl group, or a propane-2,2-diyl group. The divalent hydrocarbon group may be a halogenated hydrocarbon group in which a hydrogen atom has been substituted by a halogen group. $X^1$ may include a functional group, such as an ether group or an ester group, in addition to or instead of the divalent hydrocarbon group.

In the formula (b3), $R^{13b}$ to $R^{20b}$ are each independently a hydrogen atom or an optional substituent, and $X^2$ is a single bond or an optional linking group. Note that at least one selected from the group consisting of $R^{13b}$ to $R^{20b}$ is a group including the functional group f, and is preferably the functional group f itself. The optional substituent other than the group including the functional group f is not particularly limited, and examples thereof include a halogen group and a hydrocarbon group. As the halogen group and the hydrocarbon group, those stated above for the tetracarboxylic dianhydride a1 can be mentioned.

In $X^2$ of the formula (b3), the optional linking group is a divalent hydrocarbon group, for example. As the divalent hydrocarbon group, those stated above for $X^1$ can be mentioned. $X^2$ may include a functional group, such as an ether group or an ester group, in addition to or instead of the divalent hydrocarbon group.

In the polyimide P, the structural unit B1 derived from the diamine b1 preferably has the functional group F as described above. Particularly, the structural unit B1 preferably includes a metal salt of a carboxyl group, a metal salt of a hydroxyl group, or a metal salt of a thiol group as the functional group F, and it is particularly preferable that the structural unit B1 include the metal salt of the carboxyl group.

A metal included in the metal salt as the functional group F is not particularly limited, and examples thereof include Li, Na, K, Be, Mg, Ca, Ba, Sc, Y, Ti, Zr, V, Cr, Mo, Mn, Fe, Co, Ni, Cu, Ag, Zn, B, Al, Ga, In, and Pb. The metal is preferably Mg, Fe, Al, or Ga, and particularly preferably Al. That is, the metal salt as the functional group F is preferably an aluminum salt. Note that the metal included in the metal salt may be Na, Ca, or the like.

In the metal salt as the functional group F, the metal is specifically present as a cation. The metal (metal cation) included in the metal salt has a valence of 1 or more, for example, preferably 2 or more, and more preferably 3 or more. In one example, the metal has a valence of 2 or 3.

In the case where the structural unit B1 includes the metal salt as the functional group F, a plurality of the polyimides P can be coordinated with the metal cation included in the metal salt via a functional group such as a carboxyl group. Thereby, the polyimides P are crosslinked with each other via the metal cation. The formation of such a crosslinked structure suppresses physical aging of the polyimide P, which tends to make it possible to suppress time-dependent deterioration of the separation performance of the separation functional layer 1. In the case where the polyimide P includes the metal salt as the functional group F, the separation performance of the separation functional layer 1 tends to be improved as well. As described later, the metal salt as the functional group F can be formed by, for example, replacing, with the metal cation, a dissociative proton of the functional group f included in the polyimide P obtained from a group of monomers including the tetracarboxylic dianhydride a1 and the diamine b1.

The structural unit B1 derived from the diamine b1 is represented by formula (B1), formula (B2), or formula (B3) below, for example. The structural unit B1 represented by the formula (B1) is derived from the diamine b1 represented by the above-mentioned formula (b1). The structural unit B1 represented by the formula (B2) is derived from the diamine b1 represented by the above-mentioned formula (b2). The structural unit B1 represented by the formula (B3) is derived from the diamine b1 represented by the above-mentioned formula (b3).

[Chemical Formula 9]

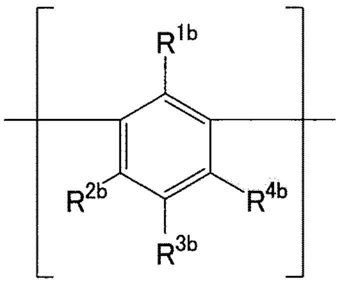
(B1)

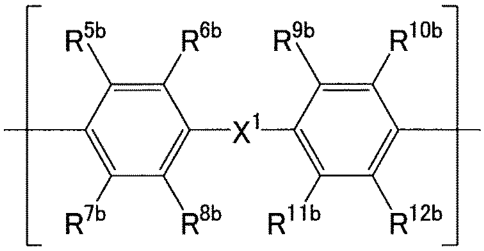
(B2)

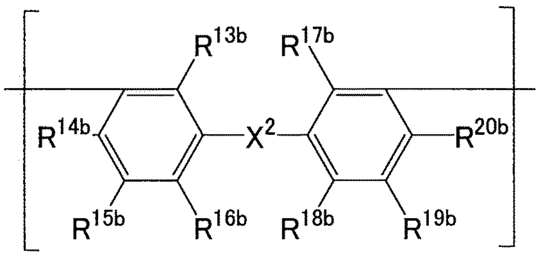
(B3)

In the formula (B1), $R^{1b}$ to $R^{4b}$ are each independently a hydrogen atom or an optional substituent. At least one selected from the group consisting of $R^{1b}$ to $R^{4b}$ is a group including the functional group F, and is preferably the functional group F itself. The optional substituent other than the group including the functional group F is not particularly limited, and examples thereof include a halogen group and a hydrocarbon group. As the halogen group and the hydrocarbon group, those stated above for the tetracarboxylic dianhydride a1 can be mentioned.

As specific examples of the structural unit B1 represented by the formula (B1), formulae (B1-1) to (B1-6) can be mentioned. Note that in the formulae (B1-2), (B1-4), and (B1-6), M is an optional metal cation, preferably a Mg ion, a Fe ion, an Al ion, or a Ga ion, and particularly preferably an Al ion. M may be a Na ion or a Ca ion.

[Chemical Formula 10]

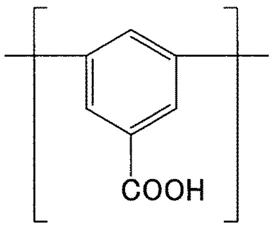

(B1-1)

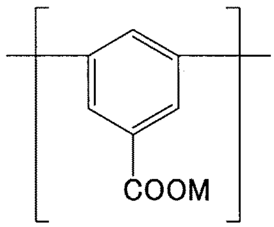

(B1-2)

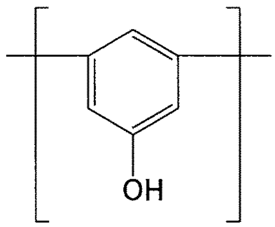

(B1-3)

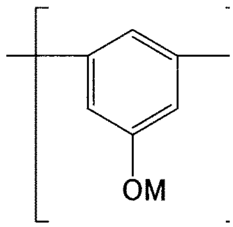

(B1-4)

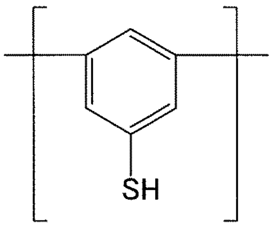

(B1-5)

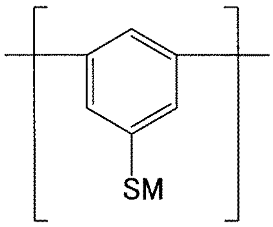

(B1-6)

In the formula (B2), $R^{5b}$ to $R^{12b}$ are each independently a hydrogen atom or an optional substituent, and $X^1$ is a single bond or an optional linking group. At least one selected from the group consisting of $R^{5b}$ to $R^{12b}$ is a group including the functional group F, and is preferably the functional group F itself. The optional substituent other than the group including the functional group F is not particularly limited, and examples thereof include a halogen group and a hydrocarbon group. As the halogen group and the hydrocarbon group, those stated above for the tetracarboxylic dianhydride a1 can be mentioned.

In $X^1$ of the formula (B2), the optional linking group is a divalent hydrocarbon group, for example. As the divalent hydrocarbon group, those stated above can be mentioned. $X^1$ may include a functional group, such as an ether group or an ester group, in addition to or instead of the divalent hydrocarbon group.

As specific examples of the structural unit B1 represented by the formula (B2), formulae (B2-1) to (B2-12) can be mentioned. In these formulae, M is an optional metal cation, preferably a Mg ion, a Fe ion, an Al ion, or a Ga ion, and particularly preferably an Al ion. M may be a Na ion or a Ca ion.

[Chemical Formula 11]

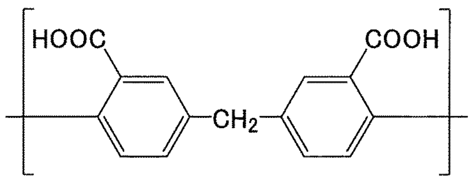

(B2-1)

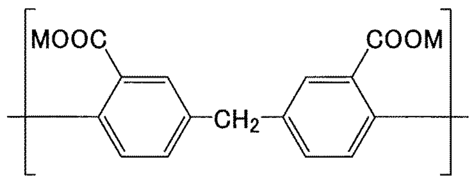

(B2-2)

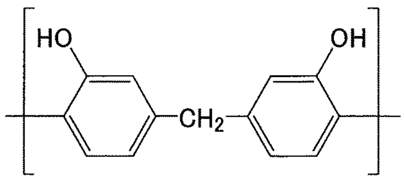

(B2-3)

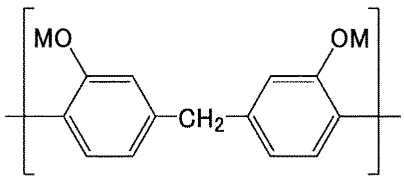

(B2-4)

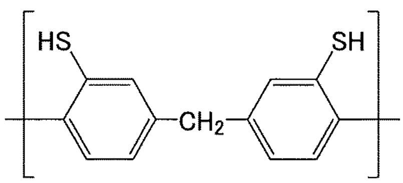

(B2-5)

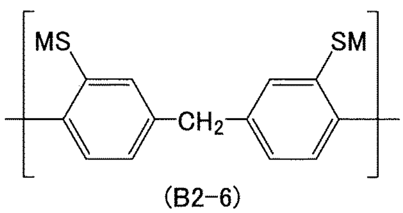

(B2-6)

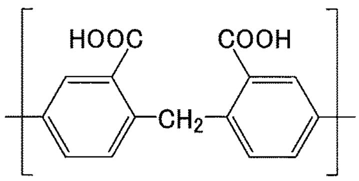

(B2-7)

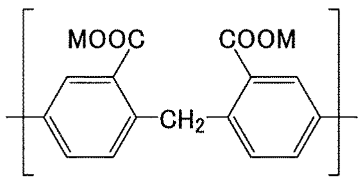

(B2-8)

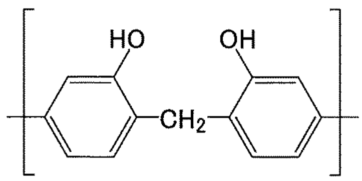

(B2-9)

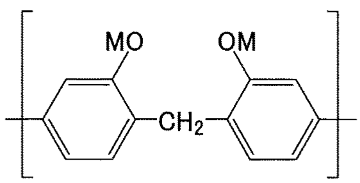

(B2-10)

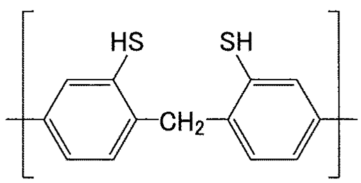

(B2-11)

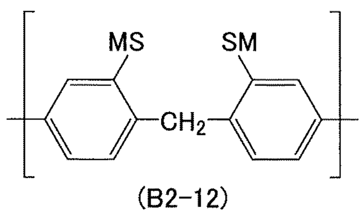

(B2-12)

In the formula (B3), $R^{13b}$ to $R^{20b}$ are each independently a hydrogen atom or an optional substituent, and $X^2$ is a single bond or an optional linking group. At least one selected from the group consisting of $R^{13b}$ to $R^{20b}$ is a group including the functional group F, and is preferably the functional group F itself. The optional substituent other than the group including the functional group F is not particularly limited, and examples thereof include a halogen group and a hydrocarbon group. As the halogen group and the hydrocarbon group, those stated above for the tetracarboxylic dianhydride a1 can be mentioned.

In $X^2$ of the formula (B3), the optional linking group is a divalent hydrocarbon group, for example. As the divalent hydrocarbon group, those stated above can be mentioned. $X^2$ may include a functional group, such as an ether group or an ester group, in addition to or instead of the divalent hydrocarbon group.

As specific examples of the structural unit B1 represented by the formula (B3), formulae (B3-1) to (B3-6) can be mentioned. In these formulae, M is an optional metal cation, preferably a Mg ion, a Fe ion, an Al ion, or a Ga ion, and particularly preferably an Al ion. M may be a Na ion or a Ca ion.

[Chemical Formula 12]

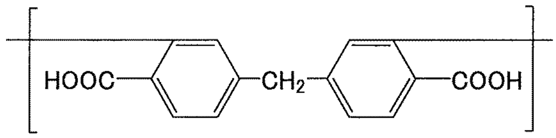

(B3-1)

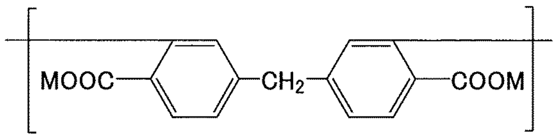

(B3-2)

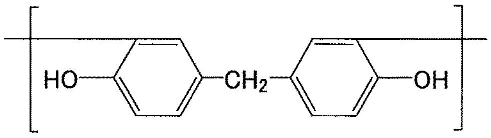

(B3-3)

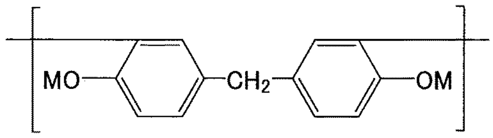

(B3-4)

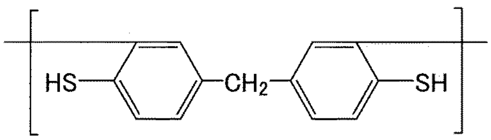

(B3-5)

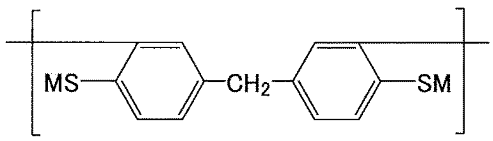

(B3-6)

In the polyimide P, a ratio p2 of an amount of substance of the structural unit B1, particularly the structural unit B1 having the functional group F, with respect to an amount of substance of all structural units B derived from diamine is, for example, 1 mol% or more, and preferably 3 mol% or more. The upper limit of the ratio p2 is, for example, but not particularly limited to, 60 mol%, and may be 50 mol%, 40 mol%, 30 mol%, or even 25 mol%. When the ratio p2 is low, the solubility of the polyimide P tends to be improved and a desirable method for manufacturing the separation functional layer 1 tends to be adopted easily. Furthermore, the intensity of the separation functional layer 1 also tends to be improved in this case. The ratio p2 is preferably 3 to 25 mol%. When the ratio p2 is in this range, the separation functional layer 1 tends to exhibit satisfactory separation performance.

The polyimide P may further include a structural unit B2 derived from diamine b2 having a sulfonyl group ($-SO_2-$). The structural unit B2 is a structural unit suitable for improving the permeation coefficient and permeation rate of an acid gas permeating through the separation functional layer 1. The diamine b2 is a compound having two primary amino groups in addition to the sulfonyl group. The number of the sulfonyl groups in the diamine b2 is, for example, but not particularly limited to, 5 or less, and preferably 1. The diamine b2 does not include, for example, a group having a dissociative proton, such as the above-mentioned functional group f.

The diamine b2 includes, for example, a ring structure having a sulfonyl group. The ring structure having the sulfonyl group is typically a thiophene 1,1-dioxide ring or a tetrahydrothiophene 1,1-dioxide ring.

The diamine b2 may have a fused ring, and the fused ring may include the ring structure having the sulfonyl group. The fused ring may include an aromatic ring in addition to the ring structure having the sulfonyl group. As the aromatic ring, those stated above for the tetracarboxylic dianhydride a1 can be mentioned.

In the diamine b2, a substituent of the fused ring includes a primary amino group, for example. The fused ring may or may not have an additional substituent other than the substituent including the primary amino group. The additional substituent is not particularly limited, and examples thereof include a halogen group and a hydrocarbon group. As the halogen group and the hydrocarbon group, those stated above for the tetracarboxylic dianhydride a1 can be mentioned.

The diamine b2 is represented by formula (c1) below, for example.

[Chemical Formula 13]

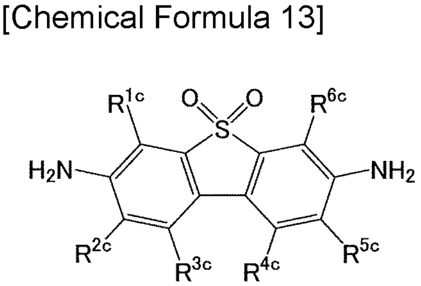

(c1)

In the formula (c1), $R^{1c}$ to $R^{6c}$ are each independently a hydrogen atom or an optional substituent. In the formula (c1), the optional substituent is, for example, a substituent other than a group including the above-mentioned functional

group f, and is specifically a halogen group, a hydrocarbon group, or the like. As the halogen group and the hydrocarbon group, those stated above for the tetracarboxylic dianhydride a1 can be mentioned.

In the polyimide P, the structural unit B2 derived from the diamine b2 is represented by formula (C1) below, for example. The structural unit B2 represented by the formula (C1) is derived from the diamine b2 represented by the above-mentioned formula (c1).

[Chemical Formula 14]

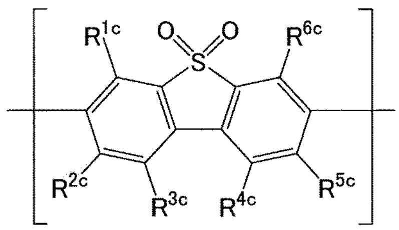

(C1)

In the formula (C1), $R^{1c}$ to $R^{6c}$ are each independently a hydrogen atom or an optional substituent. In the formula (C1), the optional substituent is, for example, a substituent other than a group including the above-mentioned functional group F, and is specifically a halogen group, a hydrocarbon group, or the like. As the halogen group and the hydrocarbon group, those stated above for the tetracarboxylic dianhydride a1 can be mentioned. The structural unit B2 represented by the formula (C1) is suitable for improving the stiffness of the polyimide P. The polyimide P with excellent stiffness tends to be able to suppress plasticization of the separation functional layer 1 even when the gas mixture to be separated has a high pressure.

As specific examples of the structural unit B2 represented by the formula (C1), formulae (C1-1) and (C1-2) can be mentioned.

[Chemical Formula 15]

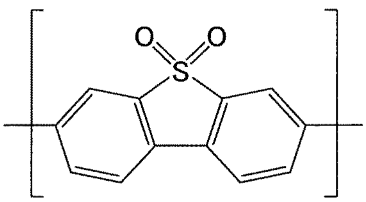

(C1-1)

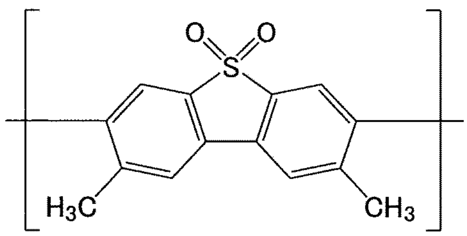

(C1-2)

In the polyimide P, a ratio p3 of an amount of substance of the above-mentioned structural unit B2 with respect to the amount of substance of all structural units B derived from diamine is, for example, but not particularly limited to, 5 mol% or more, and may be 10 mol% or more, 20 mol% or more, 30 mol% or more, or even 40 mol% or more. The upper limit of the ratio p3 is, for example, but not particularly limited to, 95 mol%, and may be 90 mol%, 80 mol%, 70 mol%, 60 mol%, or even 50 mol%.

The polyimide P may further include a structural unit B3 derived from diamine b3, which is additional diamine, other than the diamine b1 and b2. The diamine b3 is a compound that does not have the above-mentioned functional group f or sulfonyl group but has two primary amino groups. The diamine b3 does not include, for example, a group having a dissociative proton.

The diamine b3 may further have an aromatic ring. As the aromatic ring, those stated above for the tetracarboxylic dianhydride a1 can be mentioned. In the diamine b3, a substituent of the aromatic ring includes a primary amino group, for example. The aromatic ring may or may not have an additional substituent other than the substituent including the primary amino group. The additional substituent is not particularly limited, and examples thereof include a halogen group and a hydrocarbon group. As the halogen group and the hydrocarbon group, those stated above for the tetracarboxylic dianhydride a1 can be mentioned.

The diamine b3 is represented by formula (d1), formula (d2), or formula (d3) below, for example.

[Chemical Formula 16]

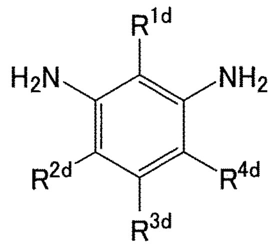
(d1)

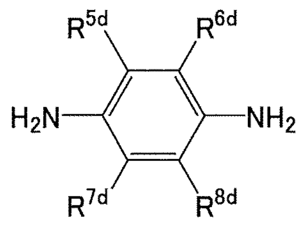
(d2)

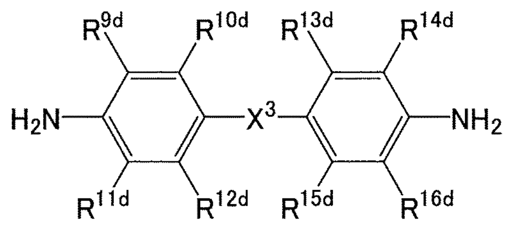
(d3)

In the formula (d1), $R^{1d}$ to $R^{4d}$ are each independently a hydrogen atom or an optional substituent. In the formula (d1), the optional substituent is, for example, a substituent other than a group including the above-mentioned functional group f and a group including a sulfonyl group, and is specifically a halogen group, a hydrocarbon group, or the like. As the halogen group and the hydrocarbon group, those stated above for the tetracarboxylic dianhydride a1 can be mentioned.

In the formula (d2), $R^{5d}$ to $R^{8d}$ are each independently a hydrogen atom or an optional substituent. In the formula (d2), the optional substituent is, for example, a substituent other than a group including the above-mentioned functional group f and a group including a sulfonyl group, and is specifically a halogen group, a hydrocarbon group, or the like. As the halogen group and the hydrocarbon group, those stated above for the tetracarboxylic dianhydride a1 can be mentioned.

In the formula (d3), $R^{9d}$ to $R^{16d}$ are each independently a hydrogen atom or an optional substituent, and $X^3$ is a single bond or an optional linking group. In the formula (d3), the optional substituent is, for example, a substituent other than a group including the above-mentioned functional group f and a group including a sulfonyl group, and is specifically a halogen group, a hydrocarbon group, or the like. As the halogen group and the hydrocarbon group, those stated above for the tetracarboxylic dianhydride a1 can be mentioned.

In $X^3$ of the formula (d3), the optional linking group is a divalent hydrocarbon group, for example. As the divalent hydrocarbon group, those stated above can be mentioned. In $X^3$, the divalent hydrocarbon group may further have an aromatic ring. As the aromatic ring, those stated above for the tetracarboxylic dianhydride a1 can be mentioned. The divalent hydrocarbon group in $X^3$ may be a fluorenediyl group. $X^3$ may include a functional group, such as an ether group or an ester group, in addition to or instead of the divalent hydrocarbon group.

The structural unit B3 derived from the diamine b3 is presented by formula (D1), formula (D2), or formula (D3) below, for example. The structural unit B3 represented by the formula (D1) is derived from the diamine b3 represented by the above-mentioned formula (d1). The structural unit B3 represented by the formula (D2) is derived from the diamine b3 represented by the above-mentioned formula (d2). The structural unit B3 represented by the formula (D3) is derived from the diamine b3 represented by the above-mentioned formula (d3).

[Chemical Formula 17]

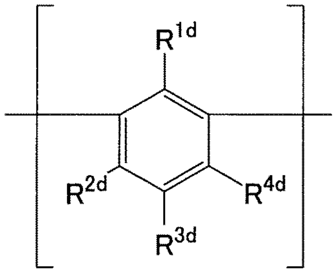

(D1)

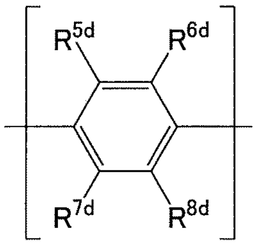

(D2)

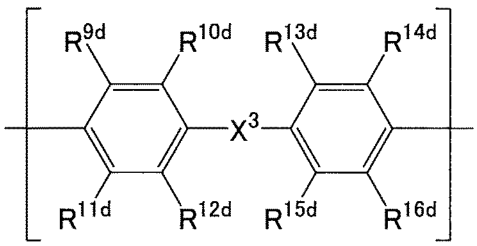

(D3)

In the formula (D1), $R^{1d}$ to $R^{4d}$ are each independently a hydrogen atom or an optional substituent. In the formula (D1), the optional substituent is, for example, a substituent other than a group including the above-mentioned functional group F, and is specifically a halogen group, a hydrocarbon group, or the like. As the halogen group and the hydrocarbon group, those stated above for the tetracarboxylic dianhydride a1 can be mentioned. As a specific example of the structural unit B3 represented by the formula (D1), formula (D1-1) below can be mentioned.

[Chemical Formula 18]

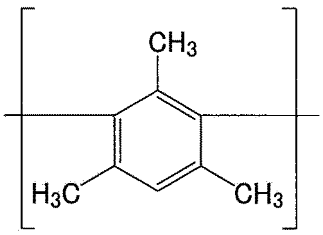

(D1-1)

In the formula (D2), $R^{5d}$ to $R^{8d}$ are each independently a hydrogen atom or an optional substituent. In the formula (D2), the optional substituent is, for example, a substituent other than a group including the above-mentioned functional group F, and is specifically a halogen group, a hydrocarbon group, or the like. As the halogen group and the hydrocarbon group, those stated above for the tetracarboxylic dianhydride a1 can be mentioned. As a specific example of the structural unit B3 represented by the formula (D2), formula (D2-1) below can be mentioned.

[Chemical Formula 19]

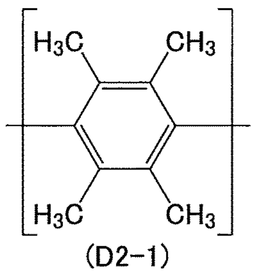

(D2-1)

In the formula (D3), $R^{9d}$ to $R^{16d}$ are each independently a hydrogen atom or an optional substituent, and $X^3$ is a single bond or an optional linking group. In the formula (D3), the optional substituent is, for example, a substituent other than a group including the above-mentioned functional group F, and is specifically a halogen group, a hydrocarbon group, or the like. As the halogen group and the hydrocarbon group, those stated above for the tetracarboxylic dianhydride a1 can be mentioned. In $X^3$ of the formula (D3), the optional linking group is a divalent hydrocarbon group, for example. As the divalent hydrocarbon group, those stated above can be mentioned. $X^3$ may include a functional group, such as an ether group or an ester group, in addition to or instead of the divalent hydrocarbon group. As specific examples of the structural unit B3 represented by the formula (D3), formulae (D3-1) to (D3-3) can be mentioned.

[Chemical Formula 20]

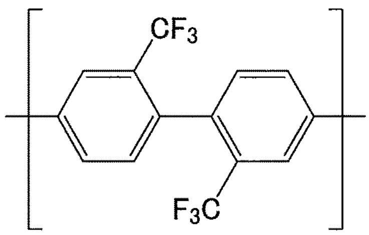

(D3-1)

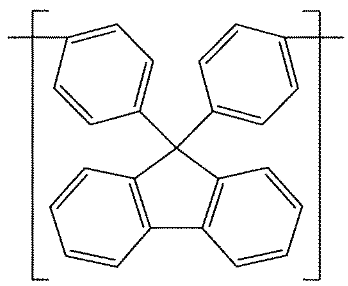

(D3-2)

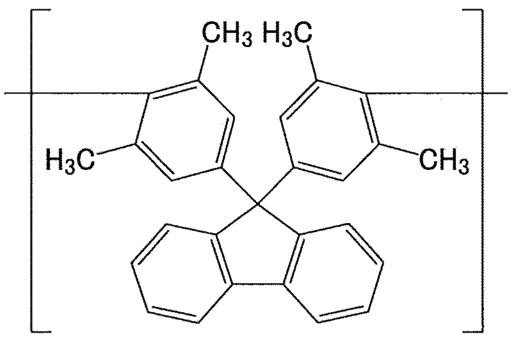

(D3-3)

In the polyimide P, a ratio p4 of an amount of substance of the above-mentioned structural unit B3 with respect to the amount of substance of all structural units B derived from diamine is, for example, but not particularly limited to, 5 mol% or more, and may be 10 mol% or more, 20 mol% or more, 30 mol% or more, or even 40 mol% or more. The upper limit of the ratio p4 is, for example, but not particularly limited to, 95 mol%, and may be 90 mol%, 80 mol%, 70 mol%, 60 mol%, or even 50 mol%.

In the polyimide P, the structural units A derived from the tetracarboxylic dianhydride and the structural units B derived from the diamine are arranged alternately. In the polyimide P, examples of the combination of the structural units A and B adjacent to each other include formula (A1-B1), formula (A1-B2), formula (A1-C1), and formula (A1-D1) below. Note that in these formulae, $R^{1a}$ to $R^{4a}$, $R^{1b}$ to $R^{12b}$, $R^{1c}$ to $R^{6c}$, and $R^{1d}$ to $R^{4d}$ are the same as those described

above for the formula (A1), the formula (B1), the formula (B2), the formula (C1), and the formula (D1).

[Chemical Formula 21]

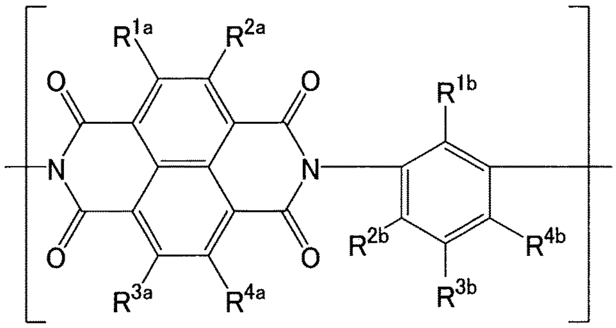

(A1-B1)

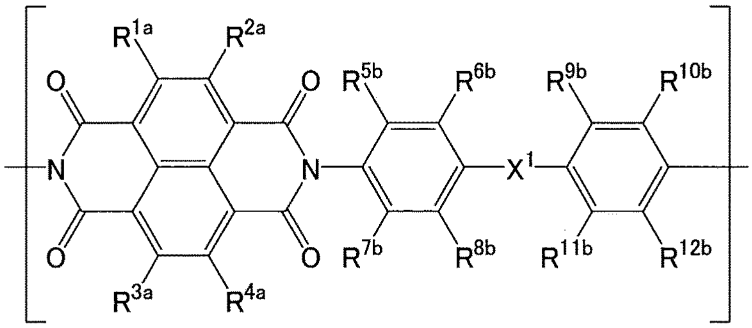

(A1-B2)

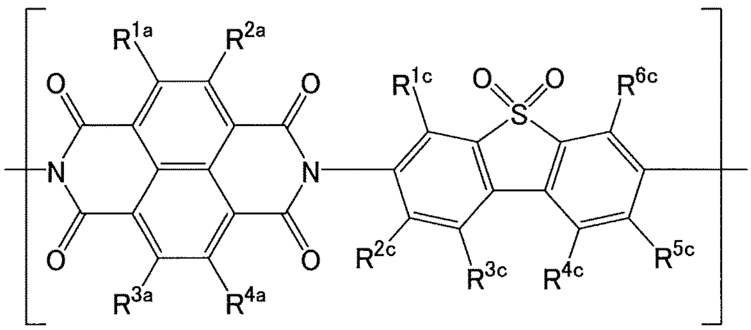

(A1-C1)

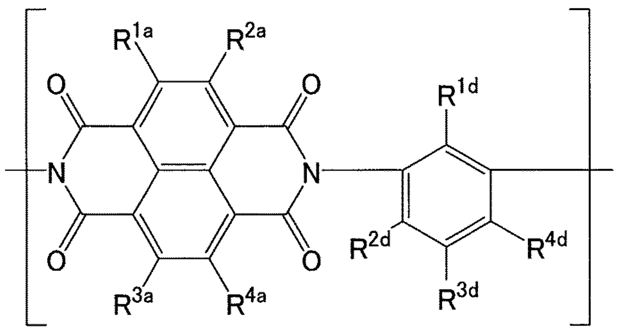

(A1-D1)

From the viewpoint of mechanical strength of the separation functional layer 1, the polyimide P has a weight-average molecular weight (Mw) of 30000 or more, for example, and preferably 50000 or more, and still more preferably 75000 or more. The upper limit of the weight-average molecular weight of the polyimide P is, for example, but not particularly limited to, 1000000. For example, a molecular weight distribution of the polyimide P is measured by gel permeation chromatograph (GPC) including a differential refractive index detector (RID) so that the weight-average molecular weight of the polyimide P can be calculated from the obtained chromatogram (chart) using a calibration curve of standard polystyrene.

The content of the polyimide P in the separation functional layer 1 is, for example, 50 wt% or more, and may be 60 wt% or more, 70 wt% or more, 80 wt% or more, 90 wt% or more, or even 95 wt% or more. The separation functional layer 1 may be composed substantially of the polyimide P alone.

The separation functional layer 1 may further include an additional component other than the polyimide P. Examples of the additional component include nanoparticles. As the nanoparticles, those stated as examples for the later-described intermediate layer 2 can be mentioned, for example. In the separation functional layer 1, the nanoparticles are dispersed in a matrix including the polyimide P, for example. The nanoparticles may be spaced from each other in the matrix, or may aggregate partially.

(Method for manufacturing separation functional layer)

In the present embodiment, a method for manufacturing the separation functional layer 1 includes, for example, step I of forming the separation functional layer 1 by applying a coating liquid (a dispersion or a solution) containing a material of the separation functional layer 1 onto a base material and drying the coating liquid.

[Step I]

In the step I in a preferred embodiment, the coating liquid contains, as the material of the separation functional layer 1, polyimide Q having at least one functional group f selected from the group consisting of a carboxyl group, a hydroxyl group, and a thiol group, and a compound M having a metal. In this embodiment, the polyimide Q is the precursor of the polyimide P, and a dissociative proton of the functional group f is replaced with a metal cation and thereby the polyimide P can be formed from the polyimide Q. As described later, this coating liquid makes it possible to form the polyimide P having a metal salt as the above-mentioned functional group F.

The polyimide Q can be produced by the following method, for example. First, a group of diamines including the above-mentioned diamine b1 is dissolved in a solvent to obtain a solution. Examples of the solvent include a polar organic solvent such as N-methyl-2-pyrrolidone or 1,3-dioxolane.

Next, a group of tetracarboxylic dianhydrides including the above-mentioned tetracarboxylic dianhydride a1 are added gradually to the obtained solution. This makes a group of monomers including the tetracarboxylic dianhydride a1 and the diamine b1 react with each other to form polyamide acid. The addition of the group of tetracarboxylic dianhydrides is carried out, for example, for 3 to 20 hours in a heating environment at 140°C or higher under the condition that the solution is being stirred.

Subsequently, the polyamide acid is imidized to obtain the polyimide Q. Examples of the imidization method include a chemical imidization method and a thermal imidization method. The chemical imidization method is a method for imidizing polyamide acid using a dehydration condensation agent under, for example, a room temperature condition. Examples of the dehydration condensation agent include acetic anhydride, pyridine, and triethylamine. The thermal imidization method is a method for imidizing polyamide acid by a heat treatment. The heat treatment is carried out at a temperature of 180°C or higher, for example.

The content of the polyimide Q in the coating liquid can be adjusted suitably in accordance with the solubility of the polyimide Q, and it is 1 wt% to 30 wt%, for example. In the coating liquid, the ratio of the weight of the polyimide Q with respect to the total weight of the polyimide Q and a solvent is 1 wt% to 30 wt%, for example.

As the metal that the compound M has, those stated above as the metal included in the metal salt as the functional group F can be mentioned. In the compound M, the metal is present as a cation, for example. Examples of the compound M include a metal complex having the metal and a ligand coordinated with the metal, and an inorganic salt including the metal. The compound M preferably includes the metal complex.

In the metal complex, the ligand preferably has volatility. In one example, the ligand may have a boiling point of 20°C to 260°C under an atmospheric pressure (101.325 kPa). The ligand having volatility is likely to evaporate at the time of drying the coating film described later, and is unlikely to remain in the separation functional layer 1. Note that the ligand does not need to have volatility. In this case, it is possible to remove the ligand from the separation functional layer 1 easily by performing a washing operation after the formation of the separation functional layer 1.

In the metal complex, the ligand is typically an organic ligand having a functional group for coordination with a metal. The number of carbon atoms in the organic ligand is, for example, but not particularly limited to, 1 to 10. Examples of the functional group included in the organic ligand include a carbonyl group such as a ketone group. The number of the functional groups included in the organic ligand is, for example, 1 or more, and may be 2 or more. Specific examples of the organic ligand include acetylacetonato (acac). Specific examples of the metal complex include $Al(acac)_3$, $Fe(acac)_2$, $Ga(acac)_3$, and $Mg(acac)_2$.

Examples of the inorganic salt include a chloride, a nitrate, and a sulfate, and specific examples thereof include LiCl, NaCl, KCl, AgNOs, $MgCl_2$, $CaCl_2$, $BaCl_2$, $NiCl_2$, $ZnCl_2$, $CuCl_2$, $Pb(NO_3)_2$, $Al(NO_3)_3$, $Fe_2(SO_4)_3$, $Ga(NO_3)_3$, $Fe(NO_3)_2$, and $Mg(NO_3)_2$.

In the coating liquid, the ratio of the weight of the compound M with respect to the weight of the polyimide Q can be adjusted suitably in accordance with the composition of the polyimide Q, etc., and it is, for example, 1 to 20 wt%, and may be 1 to 10 wt%. In the coating liquid, the ratio of an amount of substance of the compound M with respect to an amount of substance of the functional group f included in the polyimide Q is, for example, but not particularly limited to, 2.0 or more.

In the case where the coating liquid contains the metal complex as the compound M, the coating liquid may further contain a ligand. In the coating liquid, the ratio of the weight of the ligand with respect to the weight of the polyimide Q can be adjusted suitably in accordance with the contents of the polyimide Q and the metal complex, etc., and it is, for example, 1 to 20 wt%, and may be 1 to 10 wt%.

The coating liquid further contains a solvent, for example. The solvent is typically a good solvent that can dissolve the polyimide Q. The solvent preferably includes at least one selected from the group consisting of an amide compound and a lactone compound, and more preferably includes an amide compound. Examples of the amide compound include N,N-dimethylformamide (DMF), N-methyl-2-pyrrolidone (NMP), and N,N-dimethylacetamide (DMAc). Examples of the lactone compound include $\gamma$-butyrolactone.

The content of the solvent in the coating liquid is 30 wt% to 95 wt%, for example. In the coating liquid, the ratio of the weight of the solvent with respect to the total weight of the polyimide Q and the solvent is 30 wt% to 95 wt%, for example.

The coating liquid is not limited to those having the above-mentioned composition. In another preferred embodiment, the coating liquid contains the polyimide P instead of the polyimide Q and the compound M mentioned above. In this embodiment, the polyimide P has, for example, at least one functional group F selected from the group consisting of a carboxyl group, a hydroxyl group, a thiol group, and metal salts of these groups.

In the step I, the base material is typically a release liner. Examples of the base material include: a film including a resin; paper; and a sheet including a metal material such as aluminum or stainless steel. The sheet including a metal material tends to have high heat resistance. The base material is preferably a film including a resin from the viewpoint of having excellent surface smoothness. Examples of a polymer included in the resin in the base material include: polyolefin such as polyethylene, polypropylene, polybutene, polybutadiene, or polymethylpentene; polyester such as polyethylene terephthalate, polybutylene terephthalate, or polyethylene naphthalate; polyvinyl chloride and a vinyl chloride copolymer; polyurethane; and an ethylene-vinyl acetate copolymer. Polyester, particularly polyethylene terephthalate, is preferred.

A surface of the base material may be subjected to a release treatment. The release treatment can be provided by, for example, applying a release treatment agent onto the surface of the base material. Examples of the release treatment agent include a silicone-based release treatment agent, a long-chain alkyl-based release treatment agent, a fluorine-based release treatment agent, and a molybdenum sulfide-based release treatment agent. One of these release treatment agents may be used alone or two or more of them can be used in combination. The base material is preferably a polyethylene terephthalate (PET) film subjected to the release treatment.

The thickness of the base material is, for example, but not particularly limited to, 5 to 100 $\mu$m, and preferably 10 to 50 $\mu$m.

In the step I, the base material may be subjected to a surface modification treatment before the coating liquid is applied thereonto. In the case where the base material is subjected to the release treatment, the surface modification treatment may be provided to the surface of the base material, the surface having been subjected to the release treatment. Examples of the surface modification treatment include a corona treatment, a plasma treatment, an excimer treatment, and a frame treatment, and preferred is a corona treatment.

The surface modification treatment can be performed by, for example, irradiating the surface of the base material with an active energy ray. Specific examples of the active energy ray include an electron ray, an ion beam, a plasma beam, and an ultraviolet ray. In the case where the corona treatment is performed as the surface modification treatment, the discharge amount is 0.1 kW•min/$m^2$ or more, for example. The upper limit of the discharge amount is, for example, but not particularly limited to, 10 kW•min/$m^2$.

The method for applying the coating liquid onto the base material is not particularly limited, and a spin coating method, a dip coating method, and a slot-die coating method can be used, for example. The coating liquid may be applied onto the base material using an applicator, a wire bar, or the like. The coating liquid may be applied onto the surface of the base material, the surface having been subjected to the release treatment and/or the surface modification treatment.

A coating film is formed by applying the coating liquid onto the base material. The thickness of the coating film can be adjusted suitably in accordance with a target thickness of the separation functional layer 1, and it is 1 $\mu$m to 100 $\mu$m, for example.

In the step I, the separation functional layer 1 can be obtained by drying the coating film. The conditions for drying the coating film are not particularly limited, and they are, for example, that the drying temperature is 50°C to 200°C and the drying duration is 1 minute to 10 hours. The coating film can be dried using a heater, for example. In one example,

the coating film may be dried by passing through a heating unit including a heater. The coating film may be dried by passing through a plurality of heating units. The set temperatures of the heating units may be equal to or different from each other.

In the case where the coating liquid contains the polyimide Q having the functional group f and the compound M having the metal, a dissociative proton included in the functional group f of the polyimide Q is replaced with the metal (metal cation) of the compound M at the time of drying the coating film, for example. Especially, in the case where the compound M is a metal complex and a ligand included in the metal complex is volatile, the ligand is evaporated at the time of the drying and thereby the replacement of the dissociative proton of the functional group f with the metal of the compound M tends to be accelerated. Because of the replacement of the dissociative proton of the functional group f with the metal of the compound M, a metal salt of the functional group f is formed and the polyimide P is formed from the polyimide Q. In the separation functional layer 1 obtained by this method, a plurality of the polyimides P are usually crosslinked with each other via the metal cation. By having this crosslinked structure, the separation functional layer 1 tends to have high solvent resistance.

The replacement of the dissociative proton included in the functional group f with the metal of the compound M may be made after the formation of the separation functional layer 1. For example, the coating liquid containing the polyimide Q and the solvent mentioned above is applied onto the base material and dried to form the separation functional layer 1. By immersing the separation functional layer 1 in a solution containing the compound M mentioned above, the dissociative proton of the functional group f may be replaced with the metal of the compound M. The solution containing the compound M is, for example, an aqueous solution containing the above-mentioned inorganic salt. The concentration of the inorganic salt in the aqueous solution is, for example, but not particularly limited to, 0.01 to 1 mol/L. The conditions for the operation of immersing the separation functional layer 1 in the solution containing the compound M are not particularly limited, and the operation may be performed under a room temperature condition for 1 to 48 hours, for example. The separation functional layer 1 after being immersed in the above-mentioned solution may be further subjected to a washing treatment with water and a drying treatment. The drying treatment may be performed at a temperature of 150°C or lower for 1 to 24 hours.

The step I is not limited to the above method, and the separation functional layer 1 may be formed by, for example, applying the coating liquid containing the polyimide P and the solvent mentioned above onto the base material and drying the coating liquid. Alternatively, the separation functional layer 1 may be formed by applying onto the base material the coating liquid containing polyamide acid that is the precursor of the polyimide P and imidizing the polyamide acid to form the polyimide P.

[Step II]

The manufacturing method of the present embodiment may further include, after the step I, step II of providing further a heat treatment (annealing treatment) to the separation functional layer 1. The step II tends to improve the separation performance of the separation functional layer 1 and also make it possible to suppress the time-dependent deterioration of the separation performance of the separation functional layer 1. The step II also makes it possible to obtain the separation functional layer 1 that hardly includes a residual solvent because the solvent sufficiently evaporates. The step II may be performed after the step (the step III described later) of removing the base material from a laminate of the separation functional layer 1 and the base material.

In the step II, the temperature of the heat treatment is, for example, higher than 200°C, and may be 230°C or higher, or even 250°C or higher. The upper limit of the temperature of the heat treatment is, for example, but not particularly limited to, 350°C or lower, and may be 300°C or lower. The duration of the heat treatment is, for example, 1 minute or longer, and may be 10 minutes or longer or 30 minutes or longer. The upper limit of the duration of the heat treatment is, for example, but not particularly limited to, 24 hours or less.

[Step III]

The manufacturing method of the present embodiment further includes, after the step I or the step II, step III of removing the base material from a laminate of the separation functional layer 1 and the base material, for example. Removing the base material makes it possible to obtain the separation functional layer 1 that functions as a self-supporting membrane.

(Physical properties of separation functional layer)

The thickness of the separation functional layer 1 is, for example, 500 μm or less, and may be 300 μm or less, 100 μm or less, 50 μm or less, 25 μm or less, 15 μm or less,10 μm or less, 5.0 μm or less, or even 2.0 μm or less. The thickness of the separation functional layer 1 may be 0.05 μm or more, or 0.1 μm or more.

(Characteristics of separation functional layer)

As described above, the separation functional layer 1 allows an acid gas contained in a gas mixture to preferentially permeate therethrough. In one example, a permeation coefficient C1 of carbon dioxide with respect to the separation functional layer 1 when a gas mixture composed of carbon dioxide and methane is supplied to a space adjacent to one surface of the separation functional layer is, for example, 100 Barrer or more, and may be 500 Barrer or more, 1000 Barrer or more, 1500 Barrer or more, 2000 Barrer or more, or even 2500 Barrer or more. The upper limit of the permeation coefficient C1 is, for example, but not particularly limited to, 4000 Barrer, and may be 3500 Barrer or 3000 Barrer. Here, Barrer means $10^{-10}$•$cm^3$(STP) •cm/(sec•$cm^2$•cmHg). The symbol "$cm^3$(STP)" means the volume of carbon dioxide at 1 atmospheric pressure and 0°C.

The permeation coefficient C1 can be calculated by the following method. First, a gas mixture composed of carbon dioxide and methane is supplied to a space adjacent to one surface of the separation functional layer 1 while a space adjacent to another surface of the separation functional layer 1 is decompressed. Thereby, a permeated fluid that has permeated through the separation functional layer 1 can be obtained. The weight of the permeated fluid, and the volume rate of carbon dioxide and the volume rate of methane in the permeated fluid are measured. The permeation coefficient C1 can be calculated from the measurement results. In the above operation, the concentration of the carbon dioxide in the gas mixture is 50 vol% under standard conditions (0°C, 101 kPa). The gas mixture supplied to the space adjacent to the one surface of the separation functional layer 1 has a temperature of 30°C and a pressure of 0.1 MPa. The space adjacent to the other surface of the separation functional layer 1 is decompressed in such a manner that a pressure in the space is lower than an atmospheric pressure in a measurement environment by 0.1 MPa.

Under the above measurement conditions for the permeation coefficient C1, a separation factor $\alpha 1$ of the separation functional layer 1 for carbon dioxide with respect to methane is, for example, 20 or more, and may be 22 or more, 25 or more, 30 or more, 35 or more, or even 40 or more. The upper limit of the separation factor $\alpha 1$ is, for example, but not particularly limited to, 100, and may be 60. The separation factor $\alpha 1$ can be calculated by the following formula. It should be noted that, in the following formula, $X_A$ and $X_B$ are respectively the volume rate of the carbon dioxide and the volume rate of the methane in the gas mixture. $Y_A$ and $Y_B$ are respectively the volume rate of the carbon dioxide and the volume rate of the methane in the permeated fluid that has permeated through the separation functional layer 1.

Separation factor $\alpha 1 = (Y_A/Y_B)/(X_A/X_B)$

The above-mentioned permeation coefficient C1 (Barrer) and separation factor $\alpha 1$ (-) may satisfy relational expression (i) or relational expression (ii) below.

$$\alpha 1 \geq -0.004 \times C1 + 36 \quad (i)$$

$$\alpha 1 \geq -0.0072 \times C1 + 47.2 \quad (ii)$$

The separation functional layer 1 preferably has high durability. The durability of the separation functional layer 1 can be evaluated by conducting a bending test, for example. In one example, it is preferable that the above-mentioned permeation coefficient C1 and separation factor $\alpha 1$ hardly change between before and after the separation functional layer 1 is subjected to the bending test. The bending test is conducted by cutting the separation functional layer 1 into the size of 50 mm by 50 mm to produce a specimen, taking up the specimen by a columnar roll with an outer diameter of 5 mm, and leaving it in a normal temperature environment for 24 hours.

A permeation coefficient C2 of carbon dioxide with respect to the separation functional layer 1 after being subjected to the bending test is, for example, 100 Barrer or more, and may be 500 Barrer or more, 1000 Barrer or more, 1500 Barrer or more, 2000 Barrer or more, or even 2500 Barrer or more. The upper limit of the permeation coefficient C2 is, for example, but not particularly limited to, 4000 Barrer, and may be 3500 Barrer or 3000 Barrer. The permeation coefficient C2 can be measured by the same method as that for the permeation coefficient C1, except that the separation functional layer 1 after being subjected to the bending test is used.

A separation factor $\alpha 2$ of the separation functional layer 1 for carbon dioxide with respect to methane after the separation functional layer 1 is subjected to the bending test is, for example, 20 or more, and may be 22 or more, 25 or more, 30 or more, 35 or more, or even 40 or more. The upper limit of the separation factor $\alpha 2$ is, for example, but not particularly limited to, 100, and may be 60. The separation factor $\alpha 2$ can be calculated by the method mentioned above for the separation factor $\alpha 1$.

The ratio (selectivity retention ratio) of the separation factor $\alpha 2$ after the bending test is conducted with respect to the separation factor $\alpha 1$ before the bending test is conducted is, for example, 80% or more, and may be 85% or more,

90% or more, 93% or more, 95% or more, 98% or more, or even 100% or more. It can be said that the higher the selectivity retention ratio is, the higher the durability of the separation functional layer 1 is.

Furthermore, in the present embodiment, a permeation coefficient C3 of carbon dioxide with respect to the separation functional layer 1 when a gas mixture composed of carbon dioxide and nitrogen is supplied to a space adjacent to one surface of the separation functional layer is, for example, 100 Barrer or more, and may be 500 Barrer or more, 1000 Barrer or more, 1500 Barrer or more, 2000 Barrer or more, 2500 Barrer or more, or even 3000 Barrer or more. The upper limit of the permeation coefficient C3 is, for example, but not particularly limited to, 5000 Barrer, and may be 4000 Barrer.

The permeation coefficient C3 can be determined by the same method as that for the permeation coefficient C1, except that the gas mixture composed of carbon dioxide and nitrogen is used. Note that the concentration of the carbon dioxide in the gas mixture is 50 vol% under standard conditions (0°C, 101 kPa). The gas mixture supplied to the space adjacent to the one surface of the separation functional layer 1 has a temperature of 30°C and a pressure of 0.1 MPa.

Under the above measurement conditions for the permeation coefficient C3, a separation factor $\alpha 3$ of the separation functional layer 1 for carbon dioxide with respect to nitrogen is, for example, 20 or more, and may be 22 or more, 25 or more, 30 or more, 35 or more, or even 40 or more. The upper limit of the separation factor $\alpha 3$ is, for example, but not particularly limited to, 100, and may be 60. The separation factor $\alpha 3$ can be calculated by the same method as that mentioned above for the separation factor $\alpha 1$.

In the separation functional layer 1 of the present embodiment, it is preferable that the time-dependent deterioration of the separation performance be suppressed. In one example, the retention ratio of the permeation coefficient C3 when the separation functional layer 1 is stored in an environment at 85°C for 500 hours is, for example, 30% or more, and may be 40% or more, 50% or more, 60% or more, 70% or more, 80% or more, or even 90% or more. The upper limit of the retention ratio of the permeation coefficient C3 is, for example, but not particularly limited to, 98%, and may be 95%. As described above, in the case where the polyimide P includes the metal salt as the functional group F, a crosslinked structure is formed and thereby the physical aging of the polyimide P is suppressed, which tends to make it possible to suppress the time-dependent deterioration of the separation performance of the separation functional layer 1.

The retention ratio of the permeation coefficient C3 can be determined by the following method. First, the separation functional layer 1 is stored in an environment at 85°C for 500 hours. A permeation coefficient C4 of carbon dioxide with respect to the separation functional layer 1 is measured by the same method as that for the permeation coefficient C3, except that the separation functional layer 1 after being stored is used. The ratio of the permeation coefficient C4 (Barrer) with respect to the permeation coefficient C3 (Barrer) can be considered as the retention ratio of the permeation coefficient C3.

The permeation coefficient C4 of carbon dioxide with respect to the separation functional layer 1 is, for example, 100 Barrer or more, and may be 500 Barrer or more, 800 Barrer or more, 1000 Barrer or more, 1300 Barrer or more, 1500 Barrer or more, or even 1800 Barrer or more. The upper limit of the permeation coefficient C4 is, for example, but not particularly limited to, 4000 Barrer, and may be 3000 Barrer.

In another aspect, the present invention provides a separation functional layer including polyimide P, wherein

the polyimide P includes a structural unit A1 derived from a tetracarboxylic dianhydride having a six-membered ring acid anhydride structure, and

the retention ratio of a permeation coefficient calculated by the following test is 30% or more when the separation functional layer is stored in an environment at 85°C for 500 hours.

Test: An operation in which a gas mixture composed of carbon dioxide and nitrogen is supplied to a space adjacent to one surface of the separation functional layer while a space adjacent to another surface of the separation functional layer is decompressed is conducted. Based on the result of the operation, a permeation coefficient of carbon dioxide permeating through the separation functional layer is determined. In the operation, the content of the carbon dioxide in the gas mixture is 50 vol% under standard conditions, the gas mixture supplied to the space adjacent to the one surface has a temperature of 30°C and a pressure of 0.1 MPa, and the space adjacent to the other surface is decompressed in such a manner that a pressure in the space is lower than an atmospheric pressure in a measurement environment by 0.1 MPa.

(Use of separation functional layer)

As a use of the separation functional layer 1 of the present embodiment, there can be mentioned the use for separating an acid gas from a gas mixture containing the acid gas. Examples of the acid gas in the gas mixture include carbon dioxide, hydrogen sulfide, carbonyl sulfide, sulfur oxide (SOx), hydrogen cyanide, and nitrogen oxide (NOx), and preferred is carbon dioxide. The gas mixture contains an additional gas other than the acid gas. Examples of the additional gas include a nonpolar gas such as hydrogen, nitrogen, or methane, and an inert gas such as helium, and preferred

examples include nitrogen and methane. Particularly, the separation functional layer 1 of the present embodiment is suitable for use for separating carbon dioxide from a gas mixture containing carbon dioxide and at least one selected from the group consisting of methane and nitrogen. However, the use of the separation functional layer 1 is not limited to the use for separating an acid gas from the above-mentioned gas mixture.

<Embodiment of separation membrane>

As shown in FIG. 2, a separation membrane 10 of the present embodiment includes the above-mentioned separation functional layer 1, and further includes, for example, an intermediate layer 2 and a porous support member 3. The porous support member 3 supports the separation functional layer 1. The intermediate layer 2 is disposed between the separation functional layer 1 and the porous support member 3, and is in direct contact with each of the separation functional layer 1 and the porous support member 3.

(Intermediate layer)

The intermediate layer 2 includes, for example, a resin, and further includes nanoparticles dispersed in the resin (matrix). The nanoparticles may be spaced from each other in the matrix, or may aggregate partially. However, the intermediate layer 2 does not need to include the nanoparticles, and may be composed substantially of the resin.

A material of the matrix is not particularly limited, and examples thereof include a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; a polyolefin resin such as polymethylpentene; and a polyurethane resin. The matrix preferably includes a silicone resin and a polyurethane resin.

Each nanoparticle may include an inorganic material. The nanoparticle may include an organic material. The inorganic material included in the nanoparticle is, for example, silica, titania, or alumina. The nanoparticle preferably includes silica.

The nanoparticle may have a surface modified with a modifying group including a carbon atom. The nanoparticle having the surface modified with the modifying group exhibits an excellent dispersibility in the matrix. The nanoparticle is, for example, a silica nanoparticle that may have a surface modified with a modifying group. The modifying group further includes a silicon atom, for example. The surface of the nanoparticle is represented, for example, by the following formulae (I) to (III), the surface being modified with the modifying group.

[Chemical Formula 22]

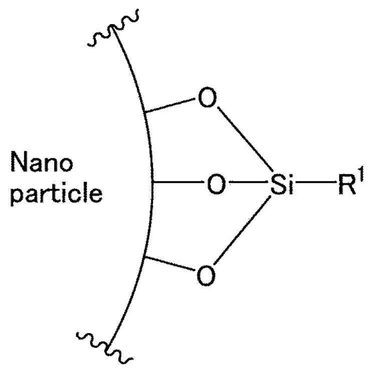

(I)

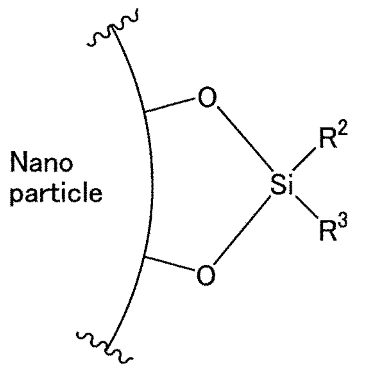

(II)

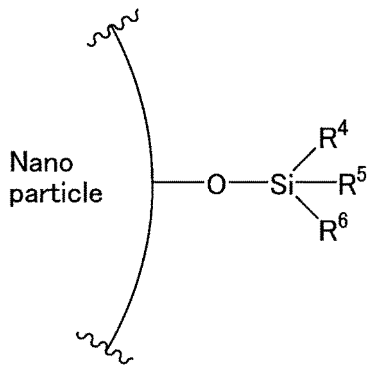

(III)

$R^1$ to $R^6$ in the formulae (I) to (III) are each independently an optionally substituted hydrocarbon group. The number of carbon atoms in the hydrocarbon group is not particularly limited as long as it is one or more. The number of carbon atoms in the hydrocarbon group may be, for example, 25 or less, 20 or less, 10 or less, or 5 or less. In some cases, the number of carbon atoms in the hydrocarbon group may be more than 25. The hydrocarbon group may be a linear or branched chain hydrocarbon group, or may be an alicyclic or aromatic cyclic hydrocarbon group. In a preferred embodiment, the hydrocarbon group is a linear or branched alkyl group having 1 to 8 carbon atoms. The hydrocarbon group is, for example, a methyl group or an octyl group, and is preferably a methyl group. The substituent in the hydrocarbon group is, for example, an amino group or an acyloxy group. Examples of the acyloxy group include a (meth)acryloyloxy group.

In another preferred embodiment, the above optionally substituted hydrocarbon group represented by $R^1$ to $R^6$ in the formulae (I) to (III) is represented by the following formula (IV). The nanoparticle having a surface modified with a modifying group including the hydrocarbon group represented by the formula (IV) is suitable for improving a permeation rate of an acid gas permeating through the separation membrane 10.

[Chemical Formula 23]

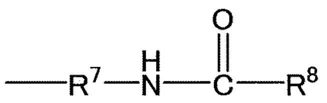

(IV)

In the formula (IV), $R^7$ is an optionally substituted alkylene group having 1 to 5 carbon atoms. The alkylene group may be linear or branched. Examples of the alkylene group include a methylene group, an ethylene group, a propane-1 ,3-diyl group, a butane-1,4-diyl group, and a pentane-1,5-diyl group, and preferred is a propane-1,3-diyl group. Examples of the substituent in the alkylene group include an amide group and an aminoalkylene group.

In the formula (IV), $R^8$ is an optionally substituted alkyl group or aryl group having 1 to 20 carbon atoms. The alkyl group may be linear or branched. Examples of the substituents in the alkyl group and the aryl group include an amino group and a carboxyl group. $R^8$ is, for example, a 3,5-diaminophenyl group.

The surface of the nanoparticle is preferably represented by the following formula (V), the surface being modified with the modifying group.

[Chemical Formula 24]

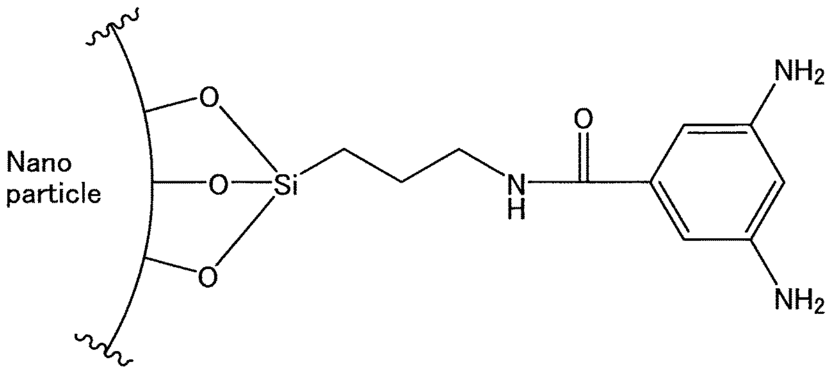

(V)

The modifying group is not limited to have the structures shown in the formulae (I) to (III). The modifying group may include a polymer chain having a polyamide structure or a polydimethylsiloxane structure instead of $R^1$ to $R^6$ in the formulae (I) to (III). In the modifying group, for example, this polymer chain is directly bonded to a silicon atom. Examples of the shape of this polymer chain include linear, dendritic, and hyper-branched shapes.

The method for modifying the surface of the nanoparticle with the modifying group is not particularly limited. For example, the surface of the nanoparticle can be modified by allowing a hydroxyl group present on the surface of the nanoparticle to react with a known silane coupling agent. In the case where the modifying group includes a polyamide structure, the surface of the nanoparticle can be modified by, for example, the method disclosed in JP 2010-222228 A.

The average particle diameter of the nanoparticles is not particularly limited as long as it is on the order of nanometers (< 1000 nm). The average particle diameter of the nanoparticles is, for example, 100 nm or less, preferably 50 nm or less, and more preferably 20 nm or less. The lower limit of the average particle diameter of the nanoparticles is, for example, 1 nm. The average particle diameter of the nanoparticles can be determined by the following method, for example. First, a cross section of the intermediate layer 2 is observed with a transmission electron microscope. In the obtained electron microscope image, the area of a specific nanoparticle is calculated by image processing. The diameter of a circle having the same area as the calculated area is regarded as the particle diameter (the diameter of the particle) of the specific nanoparticle. The particle diameter is calculated for any number (at least 50) of the nanoparticles, and the average of the calculated values is regarded as the average particle diameter of the nanoparticles. The shape of each nanoparticle is not particularly limited, and may be a spherical, ellipsoidal, flaky, or fibrous shape.

The content of the nanoparticles in the intermediate layer 2 is, for example, 5 wt% or more, preferably 10 wt% or more, and more preferably 15 wt% or more. The upper limit of the content of the nanoparticles in the intermediate layer 2 is, for example, but not particularly limited to, 30 wt%.

The thickness of the intermediate layer 2 is, for example, but not particularly limited to, less than 50 μm, preferably 40 μm or less, and more preferably 30 μm or less. The lower limit of the thickness of the intermediate layer 2 is, for example, but not particularly limited to, 1 μm. The intermediate layer 2 is, for example, a layer having a thickness of less than 50 μm.

(Porous support member)

The porous support member 3 supports the separation functional layer 1 via the intermediate layer 2. Examples of the porous support member 3 include: a nonwoven fabric; porous polytetrafluoroethylene; an aromatic polyamide fiber; a porous metal; a sintered metal; a porous ceramic; a porous polyester; porous nylon; an activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials. In one example, the porous support member 3 may be a laminate of a nonwoven fabric and a polysulfone porous layer.

The porous support member 3 has, for example, an average pore diameter of 0.01 to 0.4 $\mu$m. The thickness of the porous support member 3 is, for example, but not particularly limited to, 10 $\mu$m or more, preferably 20 $\mu$m or more, and more preferably 50 $\mu$m or more. The thickness of the porous support member 3 is, for example, 300 $\mu$m or less, preferably 200 $\mu$m or less, and more preferably 150 $\mu$m or less.

(Method for producing separation membrane)

The separation membrane 10 can be produced by the following method, for example. First, a laminate of the porous support member 3 and the intermediate layer 2 is prepared. This laminate can be produced by the following method, for example. First, a coating liquid containing the materials of the intermediate layer 2 is prepared. Next, the coating liquid containing the materials of the intermediate layer 2 is applied onto the porous support member 3 to form a coating film. The method for applying the coating liquid is not particularly limited, and a method such as spin coating method or a dip coating method can be used, for example. The coating liquid may be applied, for example, using a wire bar. Next, the coating film is dried to form the intermediate layer 2. The coating film can be dried under heating conditions, for example. The heating temperature of the coating film is, for example, 50°C or higher. The heating duration of the coating film is, for example, one minute or longer, and may be five minutes or longer. Furthermore, a surface of the intermediate layer 2 may be subjected to an adhesion improvement treatment, if necessary. The adhesion improvement treatment is, for example, a surface treatment such as application of a primer, a corona discharge treatment, or a plasma treatment.

Next, the separation functional layer 1 is formed on the intermediate layer 2 in the laminate of the porous support member 3 and the intermediate layer 2. Thereby, the separation membrane 10 can be obtained. In one example, it is possible to produce the separation membrane 10 by performing the step I mentioned above for the method for manufacturing the separation functional layer 1, using the laminate of the porous support member 3 and the intermediate layer 2 as the base material.

The method for producing the separation membrane 10 is not limited to the above method, and the separation membrane 10 may also be produced by the following method. First, the separation functional layer 1 formed on the base material, such as a release liner, is prepared by the above-mentioned method. Next, the coating liquid containing the materials of the intermediate layer 2 is applied onto the separation functional layer 1, and the applied coating liquid is dried to form the intermediate layer 2. The laminate of the intermediate layer 2 and the separation functional layer 1 is transferred to the porous support member 3. Thereby, the separation membrane 10 can be obtained.

The dissociative proton included in the functional group f of the polyimide Q that is the precursor of the polyimide P may be replaced with the metal of the compound M after the production of the separation membrane 10. For example, the dissociative proton of the functional group f may be replaced with the metal of the compound M by immersing the separation membrane 10 in a solution containing the inorganic salt mentioned above. The separation membrane 10 after being immersed in the above-mentioned solution may be further subjected to a washing treatment with water and a drying treatment.

(Shape of separation membrane)

In the present embodiment, the separation membrane 10 is typically a flat membrane. However, the separation membrane 10 may have a shape other than a flat membrane shape, and it may be a hollow fiber membrane, for example. In one example, the separation membrane 10 as a hollow fiber membrane does not need to include the intermediate layer 2 while including the separation functional layer 1 and the porous support member 3.

(Characteristics of separation membrane)

The separation membrane 10 of the present embodiment allows an acid gas contained in a gas mixture to

preferentially permeate therethrough by having the separation functional layer 1. In one example, a permeation rate T of carbon dioxide permeating through the separation membrane 10 when a gas mixture composed of carbon dioxide and methane is supplied to a space adjacent to one surface of the separation membrane 10 is, for example, 50 GPU or more, and may be 100 GPU or more, 150 GPU or more, 200 GPU or more, 300 GPU or more, 400 GPU or more, 500 GPU or more, 700 GPU or more, or even 1000 GPU or more. The upper limit of the permeation rate T is, for example, but not particularly limited to, 3000 GPU. Note that GPU means $10^{-6}$•$cm^3$(STP)/(sec•$cm^2$•cmHg).

The permeation rate T can be calculated by the method mentioned above for the permeation coefficient C1 of the separation functional layer 1. Here, the gas mixture composed of carbon dioxide and methane is supplied to, for example, a space adjacent to a principal surface 11, on the separation functional layer side, of the separation membrane 10. Furthermore, a space adjacent to a principal surface 12, on the porous support member side, of the separation membrane 10 is decompressed.

Under the measurement conditions for the permeation rate T, a separation factor $\alpha 4$ of the separation membrane 10 for carbon dioxide with respect to methane is, for example, but not particularly limited to, 20 or more, and may be 22 or more, 25 or more, 30 or more, or even 35 or more. The upper limit of the separation factor $\alpha 4$ is, for example, but not particularly limited to, 100, and may be 60. The separation factor $\alpha 4$ can be calculated by the method mentioned above for the separation factor $\alpha 1$.

<Embodiment of membrane separation device>

As shown in FIG. 3, a membrane separation device 100 of the present embodiment is provided with the separation membrane 10 and a tank 20. In the membrane separation device 100, it is also possible to use the separation functional layer 1 alone instead of the separation membrane 10. The tank 20 is provided with a first room 21 and a second room 22. The separation membrane 10 is disposed in the tank 20. In the tank 20, the separation membrane 10 separates the first room 21 from the second room 22. The tank 20 has a pair of wall surfaces, and the separation membrane 10 extends from one of them to the other.

The first room 21 has an inlet 21a and an outlet 21b. The second room 22 has an outlet 22a. The inlet 21a, the outlet 21b, and the outlet 22a each are an opening formed in the wall surfaces of the tank 20, for example.

Membrane separation using the membrane separation device 100 is carried out by the following method, for example. First, a gas mixture 30 containing an acid gas is supplied to the first chamber 21 via the inlet 21a. The concentration of the acid gas in the gas mixture 30 is, for example, but not particularly limited to, 0.01 vol% (100 ppm) or more, preferably 1 vol% or more, more preferably 10 vol% or more, still more preferably 30 vol% or more, and particularly preferably 50 vol% or more, under standard conditions. The upper limit of the concentration of the acid gas in the gas mixture 30 is, for example, but not particularly limited to, 90 vol% under standard conditions.

The pressure in the first chamber 21 may be increased by supplying the gas mixture 30. The membrane separation device 100 may further include a pump (not shown) for increasing the pressure of the gas mixture 30. The pressure of the gas mixture 30 to be supplied to the first chamber 21 is, for example, 0.1 MPa or more, and preferably 0.3 MPa or more.

The pressure in the second chamber 22 may be decreased while the gas mixture 30 is supplied to the first chamber 21. The membrane separation device 100 may further include a pump (not shown) for decompressing the inside of the second room 22. The pressure in the second chamber 22 may be decreased such that a space in the second chamber 22 has a pressure lower than an atmospheric pressure in a measurement environment by, for example, 10 kPa or more, preferably 50 kPa or more, and more preferably 100 kPa or more.

Supply of the gas mixture 30 to the first chamber 21 allows to obtain, on the other surface side of the separation membrane 10, a permeated fluid 35 in which the acid gas content is higher than in the gas mixture 30. That is, the permeated fluid 35 is supplied into the second room 22. The permeated fluid 35 contains, for example, the acid gas as a main component. The permeated fluid 35 may contain a small amount of a gas other than the acid gas. The permeated fluid 35 is discharged to an outside of the tank 20 via the outlet 22a.

The concentration of the acid gas in the gas mixture 30 gradually decreases from the inlet 21a toward the outlet 21b in the first chamber 21. The gas mixture 30 processed in the first chamber 21 (a non-permeated fluid 36) is discharged outside the tank 20 via the outlet 21b.

The membrane separation device 100 of the present embodiment is suitable for a flow-type (continuous-type) membrane separation method. The membrane separation device 100 of the present embodiment may be used for a batch-type membrane separation method.

<Modification of membrane separation device>

The membrane separation device 100 may be a spiral membrane element, a hollow fiber membrane element, or the like. FIG. 4 shows a spiral membrane element. The membrane separation device 110 of FIG. 4 includes a central

tube 41 and a laminate 42. The laminate 42 includes the separation membrane 10. The laminate 42 may include the separation functional layer 1 alone instead of the separation membrane 10.

The central tube 41 has a cylindrical shape. The central tube 41 has a surface with a plurality of pores formed therein to allow the permeated fluid 35 to flow into the central tube 41. Examples of a material of the central tube 41 include: a resin such as an acrylonitrile-butadiene-styrene copolymer (an ABS resin), a polyphenylene ether resin (a PPE resin), or a polysulfone resin (a PSF resin); and a metal such as stainless steel or titanium. The central tube 41 has an inner diameter in a range of 20 to 100 mm, for example.

The laminate 42 further includes a feed-side flow passage material 43 and a permeation-side flow passage material 44 in addition to the separation membrane 10. The laminate 42 is wound around a circumference of the central tube 41. The membrane separation device 110 may be further provided with an exterior material (not shown).

As the feed-side flow passage material 43 and the permeation-side flow passage material 44, a resin net composed of polyphenylene sulfide (PPS) or an ethylene-chlorotrifluoroethylene copolymer (ECTFE) can be used, for example.

Membrane separation using the membrane separation device 110 is carried out by the following method, for example. First, the gas mixture 30 is supplied into one end of the wound laminate 42. The permeated fluid 35 that has permeated through the separation membrane 10 of the laminate 42 moves into the central tube 41. The permeated fluid 35 is discharged to an outside via the central tube 41. The gas mixture 30 processed by the membrane separation device 110 (the non-permeated fluid 36) is discharged outside from another end of the wound laminate 42. Thus, the acid gas can be separated from the gas mixture 30.

## EXAMPLES

Hereinafter, the present invention will be described in detail by way of examples and comparative examples. It should be noted that the present invention is not limited to these examples.

### (Example 1)

[Production of separation functional layer]

First, polyimide was synthesized using an automatic polymerization apparatus (EasyMax 402 available from METTLER TOLEDO). A separable flask (400 mL volume) coming with the apparatus was equipped with a Dimroth condenser, a stirring rod, a bulk thermometer, a nitrogen introducing tube, and a flat stopper. A cooling fluid set at 10°C was circulated through a chiller of the Dimroth condenser. A $N_2$ gas was made to flow inside the flask at a flow rate of 100 mL/min. The stirring rate was set at 300 rpm. Next, 96.1 g of 1-methyl-2-pyrrolidone (super-dehydrated) as a solvent, 2.62 g (17.5 mmol) of 2,4,6-trimethyl-1,3-phenylenediamine (TrMPD) and 4.80 g (17.5 mmol) of 3,7-diamino-2,8-dimethyldibenzothiophene sulfone (DDBT), both as diamine, were added into the flask. They were stirred at a room temperature to dissolve the diamine in the solvent. To the obtained solution, 9.53 g (35.5 mmol) of naphthalene-1,4,5,8-tetracarboxylic dianhydride (NTDA) as a tetracarboxylic dianhydride and 8.54 g (70 mmol) of benzoic acid were further added. The temperature of the jacket of the apparatus was raised to 180°C and the mixture was stirred for 8 hours. At that time, the inner temperature of the flask was 172 to 175°C. After the stirring, the inner temperature of the flask was cooled to 25°C, and the flask was left at rest overnight.

Next, 9.04 g (70 mmol) of isoquinoline was added thereto, the temperature of the jacket was raised to 180°C again, and the resultant was stirred for 8 hours. The reaction solution was left at rest overnight, and then 226 g of 1-methyl-2-pyrrolidone was added to dilute the reaction solution. Next, 650 mL of methanol was dropped to the reaction solution over about 30 minutes using a dropping funnel to perform reprecipitation purification. An operation of filtering out the deposited polyimide and washing the polyimide with 300 mL of methanol was performed two times. After the washing, the polyimide filtered out was dried by a hot air circulation dryer at 60°C for 15 hours, and further dried by a vacuum dryer at 100°C for 8 hours. Thereby, polyimide was obtained in a yield of 17.1 g.

Next, the polyimide was dissolved in N-methyl-2-pyrrolidone (NMP). The obtained solution was applied onto a release liner to obtain a coating film. Next, the coating film was dried to form a separation functional layer (self-supporting membrane) of Example 1. This self-supporting membrane was peeled off from the release liner to be used.

[Production of separation membrane]

A separation membrane (composite membrane) of Example 1 was produced in the same manner as the separation functional layer mentioned above, except that the polyimide was dissolved in a mixed solvent obtained by mixing γ-butyrolactone and cyclopentanone at a weight ratio of 20:80 and the obtained solution was applied onto a laminate of a porous support member and an intermediate layer. Note that the laminate of a porous support member

and an intermediate layer was produced by the following method. First, a silicone resin (POLON MF-56 available from Shin-Etsu Chemical Co., Ltd.) and a polyurethane resin (TAKELAC W-6010 available from Mitsui Chemicals, Inc.) were mixed so as to reach a solid content ratio of 90:10, and furthermore the mixture was diluted with ion exchange water so as to have a solid content concentration of 10 wt%. Next, the obtained coating liquid was applied onto a porous support member using a bar coater. As the porous support member, an ultrafiltration membrane (RS-50 available from Nitto Denko Corporation) was used. The coating liquid was applied under the condition of a coating thickness of 10 μm. Next, the obtained coating film was dried at 110°C for 5 minutes. Thereby, a laminate of the porous support member and an intermediate layer was obtained. The intermediate layer had a thickness of 1 μm.

(Examples 2 to 21)

Separation functional layers (self-supporting membranes) of Examples 2 to 21 were produced in the same manner as in Example 1, except that the type and ratio of the diamine were changed as shown in Tables 1 and 2. In addition, a separation membrane (composite membrane) was also produced in each of Examples 4, 5, 8, and 9 in the same manner as in Example 1.

In Examples 3, 5, 7, 9 to 12, 14, 16, and 18 to 21, a treatment of immersing the produced separation functional layer (or the separation membrane) in an aqueous solution of an inorganic salt was performed. Specifically, the separation functional layer (or the separation membrane) was immersed in methanol for 24 hours first, and then taken out therefrom and immersed in acetone for 15 hours. The separation functional layer (or the separation membrane) after being immersed was dried by a vacuum dryer at a 120°C for 8 hours. The separation functional layer (or the separation membrane) after being dried was immersed in an aqueous solution of an inorganic salt having a concentration of 0.1 mol/L for 24 hours. Note that $Al(NO_3)_3$ was used as the inorganic salt in Examples 3, 5, 7, 9, 14, 16, and 18. In Examples 10 and 19, $Ga(NO_3)_3$ was used as the inorganic salt. In Examples 11 and 20, $Fe(NO_3)_2$ was used as the inorganic salt. In Examples 12 and 21, $Mg(NO_3)_2$ was used as the inorganic salt.

In the operation of immersing the separation functional layer (or the separation membrane) in the aqueous solution of the inorganic salt, the aqueous solution was replaced with a new one 3 times for 24 hours. By this operation, a dissociative proton of the functional group f (a carboxyl group) included in the polyimide was replaced with a metal cation, such as an aluminum cation, to form a metal salt of the functional group f. Next, the separation functional layer (or the separation membrane) was immersed in ion exchange water for 24 hours to be washed. During this operation, the ion exchange water was replaced with new ion exchange water 3 times. Next, the separation functional layer (or the separation membrane) was dried at 120°C for 8 hours.

[Evaluation of characteristics of separation functional layer (self-supporting membrane)]

(Gas permeation test)

By the following method, the separation functional layer of each of Examples 1 to 21 was measured for the permeation coefficient C1 of carbon dioxide, and the separation factor α1 ($CO_2/CH_4$) of the separation functional layer for carbon dioxide with respect to methane was measured. First, the separation functional layer was placed in a metal cell, and the metal cell was sealed with an O-ring so that no leakage would occur. Next, a gas mixture was injected into the metal cell so that the gas mixture would come into contact with one principal surface of the separation functional layer. The gas mixture was composed substantially of carbon dioxide and methane. The concentration of carbon dioxide in the gas mixture was 50 vol% under standard conditions. The gas mixture injected into the metal cell had a temperature of 30°C and a pressure of 0.1 MPa. Next, a space adjacent to another principal surface of the separation functional layer was decompressed using a vacuum pump. This space was decompressed in such a manner that a pressure in the space was lower than an atmospheric pressure in a measurement environment by 0.1 kPa. Accordingly, a permeated fluid was obtained from the other principal surface of the separation functional layer. The permeation coefficient C1 and the separation factor α1 were calculated based on the composition of the obtained permeated fluid, the weight of the permeated fluid, etc. Tables 1 and 2 and FIG. 5 show the results. The dashed lines (i) and (ii) in FIG. 5 correspond respectively to the relational expressions (i) and (ii) between the permeation coefficient C1 and the separation factor α1 mentioned above.

(Bending test)

The separation functional layer of each of Examples 1 to 21 was subjected to a bending test by the following method. First, the separation functional layer was cut into the size of 50 mm by 50 mm to produce a specimen. Next, this specimen was taken up by a columnar roll with an outer diameter of 5 mm and left in a normal temperature environment for 24 hours. The separation functional layer after undergoing the bending test was subjected to the above-mentioned gas permeation test to measure the permeation coefficient C2 of carbon dioxide, and the separation factor α2 ($CO_2/CH_4$)

of the separation functional layer for carbon dioxide with respect to methane. Tables 1 and 2 show the results.

[Evaluation of characteristics of separation membrane (composite membrane)] (Gas permeation test)

By the method mentioned above for the separation functional layer, the separation membrane of each of Examples 1, 4, 5, 8, and 9 was measured for the permeation rate T of carbon dioxide, and the separation factor α4 ($CO_2/CH_4$) of the separation membrane for carbon dioxide with respect to methane was measured. Table 1 shows the results.

[Table 1]

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Composition of polyimide in separation functional layer | Molar ratio | Acid anhydride | NTDA | 100 | 100 | 100 | 100 | 100 | 100 | 100 | 100 | 100 |
| | | Diamine | TrMPD | 50 | 48.75 | 48.75 | 47.5 | 47.5 | 46.25 | 46.25 | 45 | 45 |
| | | | DDBT | 50 | 48.75 | 48.75 | 47.5 | 47.5 | 46.25 | 46.25 | 45 | 45 |
| | | | DBA (monovalent carboxylic acid) | - | 2.5 | 2.5 | 5 | 5 | 7.5 | 7.5 | 10 | 10 |
| | | | MBAA (divalent carboxylic acid) | - | - | - | - | - | - | - | - | - |
| | Metal salt | | Al salt (trivalent) | Not included | Not included | Included | Not included | Included | Not included | Included | Not included | Included |
| Characteristics of self-supporting membrane | $CO_2$ permeation coefficient C1 (Barrer) | | Before bending test | 3500 | 2115 | 2913 | 1745 | 2771 | 834 | 2167 | 746 | 2164 |
| | $CO_2/CH_4$ separation factor α1 (-) | | Before bending test | 21 | 23.1 | 25.4 | 24.3 | 32.1 | 28.9 | 39.7 | 28.7 | 51.4 |
| | $CO_2$ permeation coefficient C2 (Barrer) | | After bending test | 3228 | 2098 | 2887 | 1677 | 2823 | 787 | 2237 | 749 | 2331 |
| | $CO_2/CH_4$ separation factor α2 (-) | | After bending test | 18.9 | 23 | 24.5 | 25.4 | 32.7 | 26.7 | 38.9 | 28.7 | 45.3 |
| | Selectivity retention ratio α2/α1 (%) | | | 90.0 | 99.6 | 96.5 | 104.5 | 101.9 | 92.4 | 98.0 | 100.0 | 88.1 |
| | Thickness of self-supporting membrane (μm) | | | 12 | 12 | 12 | 12 | 12 | 12 | 12 | 12 | 12 |
| Characteristics of composite membrane | $CO_2$ permeation rate T (GPU) | | Before bending test | 1250 | - | - | 453 | 1025 | - | - | 216 | 895 |
| | $CO_2/CH_4$ separation factor α4 (-) | | Before bending test | 18.7 | - | - | 21.6 | 30.1 | - | - | 30.4 | 37.9 |
| | Thickness of separation functional layer (μm) | | | 2.3 | - | - | 2.2 | 2.2 | - | - | 1.9 | 1.9 |

[Table 2]

| | | | | Example 10 | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|---|---|---|
| Composition of polyimide in separation functional layer | Molar ratio | Acid anhydride | NTDA | 100 | 100 | 100 | 100 | 100 | 100 | 100 | 100 | 100 | 100 | 100 | 100 |
| | | Diamine | TrMPD | 45 | 45 | 45 | 25 | 25 | 48.75 | 48.75 | 47.5 | 47.5 | 47.5 | 47.5 | 47.5 |
| | | | DDBT | 45 | 45 | 45 | 25 | 25 | 48.75 | 48.75 | 47.5 | 47.5 | 47.5 | 47.5 | 47.5 |
| | | | DBA (monovalent carboxylic acid) | 10 | 10 | 10 | 50 | 50 | - | - | - | - | - | - | - |
| | | | MBAA (divalent carboxylic acid) | - | - | - | - | - | 2.5 | 2.5 | 5 | 5 | 5 | 5 | 5 |
| | Metal salt | | Al salt (trivalent) | Not included | Not included | Not included | Not included | Included | Not included | Included | Not included | Included | Not included | Not included | Not included |
| | | | Ga salt (trivalent) | Included | Not included | Not included | Not included | Not included | Not included | Not included | Not included | Not included | Included | Not included | Not included |
| | | | Fe salt (divalent) | Not included | Included | Not included | Not included | Not included | Not included | Not included | Not included | Not included | Not included | Included | Not included |
| | | | Mg salt (divalent) | Not included | Not included | Included | Not included | Not included | Not included | Not included | Not included | Not included | Not included | Not included | Included |

(continued)

| | | | Example 10 | Example 11 | Example 12 | Example 13 | Example 14 | Example 15 | Example 16 | Example 17 | Example 18 | Example 19 | Example 20 | Example 21 |
|---|---|---|---|---|---|---|---|---|---|---|---|---|---|---|
| Characteristics of self-supporting membrane | $CO_2$ permeation coefficient C1 (Barrer) | Before bending test | 1556 | 1336 | 1012 | 145 | 949 | 523 | 2048 | 813 | 2331 | 1885 | 1545 | 1123 |
| | $CO_2/CH_4$ separation factor $\alpha 1$(-) | | 45.1 | 42.7 | 51.3 | 30.8 | 44.1 | 32.1 | 36.5 | 28.1 | 34.1 | 35.1 | 36.7 | 49.8 |
| | $CO_2$ permeation coefficient C2 (Barrer) | After bending test | 1663 | 1378 | 1019 | 156 | 922 | 511 | 2321 | 834 | 2445 | 1824 | 1478 | 1086 |
| | $CO_2/CH_4$ separation factor $\alpha 2$(-) | | 43.6 | 41.7 | 51.2 | 30.8 | 41.2 | 33.5 | 37.6 | 28.9 | 34.5 | 35.1 | 36.5 | 49.9 |
| | Selectivity retention ratio $\alpha 2/\alpha 1$ (%) | | 96.7 | 97.7 | 99.8 | 1000 | 93.4 | 104.4 | 103.0 | 102.8 | 101.2 | 1000 | 99.5 | 100.2 |
| | Thickness of self-supporting membrane ($\mu$m) | | 12 | 12 | 12 | 12 | 12 | 12 | 12 | 12 | 12 | 12 | 12 | 12 |

Abbreviations shown in Tables 1 and 2 are as follows.

NTDA: Naphthalene-1,4,5,8-tetracarboxylic dianhydride (a compound in which $R^{1a}$ to $R^{4a}$ are each a hydrogen atom in the formula (a1))
TrMPD: 2,4,6-trimethyl-1,3-phenylenediamine (a compound in which $R^{1d}$, $R^{2d}$, and $R^{4d}$ are each a methyl group and $R^{3d}$ is a hydrogen atom in the formula (d1))
DDBT 3,7-diamino-2,8-dimethyldibenzothiophene sulfone (a compound in which $R^{2c}$ and $R^{5c}$ are each a methyl group and $R^{1c}$, $R^{3c}$, $R^{4c}$, and $R^{6c}$ are each a hydrogen atom in the formula (c1))
DBA: 3,5-diaminobenzoic acid (a compound in which $R^{3b}$ is a carboxyl group and $R^{1b}$, $R^{2b}$, and $R^{4b}$ are each a hydrogen atom in the formula (b1))
MBAA: 5,5'-methylenebis(2-aminobenzoic acid) (a compound in which $R^{5b}$ and $R^{10b}$ are each a carboxyl group, $R^{6b}$ to $R^{9b}$, $R^{11b}$, and $R^{12b}$ are each a hydrogen atom, and $X^1$ is a methylene group in the formula (b2))

As can be seen from Tables 1 and 2 and FIG. 5, each of the separation functional layers of Examples 2 to 21 in which at least one of the structural unit A1 and the structural units B1 has the functional group F in the polyimide had a greater separation factor $\alpha 1$ for carbon dioxide with respect to methane than that of the separation functional layer of Example 1. Especially, as can be seen from the results of Examples 2 to 21, the separation functional layers had improved separation performance by allowing the polyimide to include a metal salt as the functional group F (FIG. 5). Usually, the permeation coefficient and the separation factor tend to show a trade-off relationship in a separation functional layer. However, in the separation functional layers of Examples 5, 7, 9, 10, 16, and 18 to 20, both the permeation coefficient C1 and the separation factor $\alpha 1$ exhibited satisfactory results (FIG. 5).

(Example 22)

First, the polyimide synthesized in Example 2 was prepared. This polyimide was put in a 10 L pail can, and N-methyl-2-pyrrolidone (NMP) as a solvent and acetylacetone as a ligand were further added thereto to obtain a mixed solution. This mixed solution was stirred at a rotation speed of 700 to 1400 rpm for 1 hour using a propeller-type stirring blade. Next, NMP and $Al(acac)_3$ as the metal complex were put in a separate screw tube, and furthermore the resultant was subjected to an ultrasonic treatment using an ultrasonic washing machine to obtain an $Al(acac)_3$ solution. The $Al(acac)_3$ solution and the above-mentioned mixed solution were mixed further and the mixture was stirred at a rotation speed of 700 to 1400 rpm for 1 hour using a propeller-type stirring blade to prepare a coating liquid.

In the coating liquid, the ratio of the weight of the polyimide with respect to the total weight of the polyimide and the NMP was 8 wt%, and the ratio of the weight of the NMP with respect to the above total weight was 92 wt%. In the coating liquid, the ratio of the weight of the $Al(acac)_3$ with respect to the weight of the polyimide and the ratio of the weight of the acetylacetone with respect to the weight of the polyimide were both 6 wt%.

Next, as the base material, a polyethylene terephthalate (PET) film (MRF75T302 available from Mitsubishi Chemical Corporation) subjected to the release treatment was prepared. As for this base material, the surface thereof subjected to the release treatment was subjected to a corona treatment under the condition of a discharge amount of 0.25 $kW \cdot min/m^2$. Next, the above-mentioned coating liquid was applied onto the base material to form a coating film. The application of the coating liquid was performed using a slot die.

Next, the coating film was conveyed at the speed of 1 m/min and allowed to pass through three heating units to be dried. Specifically, the coating film was allowed to pass through a first heating unit, a second heating unit, and a third heating unit in this order. The set temperature of the first heating unit was 100°C, the set temperature of the second heating unit was 130°C, and the set temperature of the third heating unit was 130°C. The duration (drying duration) in which the coating film passed through the first to third heating units was 6 minutes. A separation functional layer was obtained by drying the coating film. The drying of the coating film allowed a dissociative proton of the functional group f (carboxyl group) included in the polyimide to be replaced with the Al of the metal complex. Thereby, an Al salt of the functional group f was formed.

Next, the base material was removed from the laminate of the separation functional layer and the base material. Furthermore, the separation functional layer was subjected to an additional heat treatment. The heat treatment was performed at 300°C for 30 minutes. Thereby, a separation functional layer (self-supporting membrane) of Example 22 was obtained.

(Examples 23 to 25)

Separation functional layers (self-supporting membranes) of Examples 23 to 25 were produced in the same manner as in Example 22, except that the polyimides synthesized in Example 4, Example 8, and Example 13 were used respectively instead of the polyimide of Example 2.

(Examples 26 to 32)

Separation functional layers (self-supporting membranes) of Examples 26 to 32 were produced in the same manner as in Example 24, except that the type of the metal complex and the ratio of the weight of the metal complex with respect to the weight of the polyimide in the coating liquid were changed as shown in Table 3.

(Example 33)

A separation functional layer (self-supporting membrane) of Example 33 was produced in the same manner as in Example 22, except that the polyimide synthesized in Example 17 was used instead of the polyimide of Example 2.

(Examples 34 to 40)

Separation functional layers (self-supporting membranes) of Examples 34 to 40 were produced in the same manner as in Example 33, except that the type of the metal complex and the ratio of the weight of the metal complex with respect to the weight of the polyimide in the coating liquid were changed as shown in Table 4.

(Gas permeation test)

The permeation coefficient C3 of carbon dioxide with respect to the separation functional layer of each of Examples 1, 8 and 22 to 40 was measured in the same manner as the permeation coefficient C1, except that a gas mixture composed of carbon dioxide and nitrogen was used. Furthermore, the separation functional layer was stored in an environment at 85°C for 500 hours, and then the permeation coefficient C4 of carbon dioxide with respect to the separation functional layer was measured in the same manner as the permeation coefficient C3. Based on the results of these measurements, the ratio of the permeation coefficient C4 with respect to the permeation coefficient C3 was calculated to be regarded as the retention ratio of the permeation coefficient C3. Tables 3 and 4 show the results.

[Table 3]

| | | | | Example 1 | Example 22 | Example 23 | Example 24 | Example 25 | Example 26 | Example 8 | Example 27 | Example 28 | Example 29 | Example 30 | Example 31 | Example 32 |
|---|---|---|---|---|---|---|---|---|---|---|---|---|---|---|---|---|
| Composition of poly imide | Molar ratio | Acid anhydride | NTDA | 100 | 100 | 100 | 100 | 100 | 100 | 100 | 100 | 100 | 100 | 100 | 100 | 100 |
| | | Diamine | TrMPD | 50 | 48.75 | 47.5 | 45 | 25 | 45 | 45 | 45 | 45 | 45 | 45 | 45 | 45 |
| | | | DDBT | 50 | 48.75 | 47.5 | 45 | 25 | 45 | 45 | 45 | 45 | 45 | 45 | 45 | 45 |
| | | | DBA (monovalent carboxylic acid) | - | 2.5 | 5 | 10 | 50 | 10 | 10 | 10 | 10 | 10 | 10 | 10 | 10 |
| | | | MBAA (divalent carboxylic acid) | - | - | - | - | - | - | - | - | - | - | - | - | - |
| Composition of coating liquid | Weight ratio (*1) | Metal complex | $Al(acac)_3$ | - | 6 | 6 | 6 | 6 | 10 | - | - | - | - | - | - | - |
| | | | $Fe(acac)_2$ | - | - | - | - | - | - | - | 6 | 10 | - | - | - | - |
| | | | Ga(acac)s | - | - | - | - | - | - | - | - | - | 6 | 10 | - | - |
| | | | Mg(acac)2 | - | - | - | - | - | - | - | - | - | - | - | 6 | 10 |
| Characteristics | $CO_2$ permeation coefficient C3 (Barrer) before storage | | | 3600 | 3110 | 2715 | 2505 | 866 | 1846 | 1542 | 1547 | 2686 | 2348 | 766 | 2347 | 694 |
| | $CO_2$ permeation coefficient C4 (Barrer) after storage | | | 723 | 1023 | 1877 | 1294 | 489 | 1628 | 324 | 1060 | 1471 | 1100 | 457 | 1444 | 518 |
| | Permeation coefficient retention ratio C4/C3 (%) | | | 20.0 | 32.9 | 69.1 | 51.7 | 56.5 | 88.2 | 21.0 | 68.5 | 54.8 | 46.8 | 59.7 | 61.5 | 74.6 |
| | Thickness ($\mu$m) | | | 12 | 12 | 12 | 12 | 12 | 12 | 12 | 12 | 12 | 12 | 12 | 12 | 12 |

(*1) The ratio (wt%) of the weight of the metal complex to the weight of the polyimide.

[Table 4]

| | | | | Example 33 | Example 34 | Example 35 | Example 36 | Example 37 | Example 38 | Example 39 | Example 40 |
|---|---|---|---|---|---|---|---|---|---|---|---|
| Composition of polyimide | Molar ratio | Acid anhydride | NTDA | 100 | 100 | 100 | 100 | 100 | 100 | 100 | 100 |
| | | Diamine | TrMPD | 47.5 | 47.5 | 47.5 | 47.5 | 47.5 | 47.5 | 47.5 | 47.5 |
| | | | DDBT | 47.5 | 47.5 | 47.5 | 47.5 | 47.5 | 47.5 | 47.5 | 47.5 |
| | | | DBA (monovalent carboxylic acid) | - | - | - | - | - | - | - | - |
| | | | MBAA (divalent carboxylic acid) | 5 | 5 | 5 | 5 | 5 | 5 | 5 | 5 |
| Composition of coating liquid | Weight ratio (*1) | Metal complex | $Al(acac)_3$ | 6 | 10 | - | - | - | - | - | - |
| | | | $Fe(acac)_2$ | - | - | 6 | 10 | - | - | - | - |
| | | | $Ga(acac)_3$ | - | - | - | - | 6 | 10 | - | - |
| | | | $Mg(acac)_2$ | - | - | - | - | - | - | 6 | 10 |
| Characteristics | $CO_2$ permeation coefficient C3 (Barrer) before storage | | | 1836 | 3389 | 2914 | 3794 | 3511 | 2866 | 2347 | 694 |
| | $CO_2$ permeation coefficient C4 (Barrer) after storage | | | 1206 | 2029 | 1697 | 1994 | 1504 | 1438 | 1444 | 518 |
| | Permeation coefficient retention ratio C4/C3 (%) | | | 65.7 | 59.9 | 58.2 | 52.6 | 42.8 | 50.2 | 61.5 | 74.6 |
| | Thickness ($\mu$m) | | | 12 | 12 | 12 | 12 | 12 | 12 | 12 | 12 |

(*1) The ratio (wt%) of the weight of the metal complex to the weight of the polyimide.

Abbreviations shown in Tables 3 and 4 are the same as those in Tables 1 and 2.

As can be seen from Tables 3 and 4, each of the separation functional layers of Examples 22 to 40 in which the polyimide included the metal salt as the functional group F had a higher value of the retention ratio of the permeation coefficient C3 than those of Examples 1 and Example 8 when stored in the environment at 85°C for 500 hours. It is inferred that this result was because the crosslinked structure of the polyimide via a metal cation included in the metal salt suppressed the physical aging of the polyimide.

INDUSTRIAL APPLICABILITY

The separation functional layer and the separation membrane of the present embodiment are suitable for separating an acid gas from a gas mixture containing the acid gas. In particular, the separation functional layer and the separation membrane of the present embodiment are suitable for separating carbon dioxide from an off-gas from a chemical plant or a thermal power plant.

## Claims

**1.** A separation functional layer comprising polyimide P, wherein

the polyimide P includes
a structural unit A1 derived from a tetracarboxylic dianhydride a1 having a six-membered ring acid anhydride structure, and
a structural unit B1 derived from diamine b1, and
at least one of the structural unit A1 and the structural unit B1 has at least one functional group F selected from the group consisting of a carboxyl group, a hydroxyl group, a thiol group, and metal salts of these groups.

**2.** The separation functional layer according to claim 1, wherein at least one of the structural unit A1 and the structural unit B1 includes the metal salt of the carboxyl group as the functional group F.

**3.** The separation functional layer according to claim 1, wherein a metal included in the metal salt has a valence of 2 or 3.

**4.** The separation functional layer according to claim 1, wherein the metal salt is an aluminum salt.

**5.** The separation functional layer according to claim 1, wherein the structural unit B1 has the functional group F.

**6.** The separation functional layer according to claim 5, wherein in the polyimide P, a ratio of an amount of substance of the structural unit B1 having the functional group F with respect to an amount of substance of all structural units B derived from diamine is 3 to 25 mol%.

**7.** The separation functional layer according to claim 5, wherein the diamine b1 includes an aromatic ring.

**8.** The separation functional layer according to claim 5, wherein the structural unit B1 is represented by formula (B1), formula (B2), or formula (B3) below:

[Chemical Formula 1]

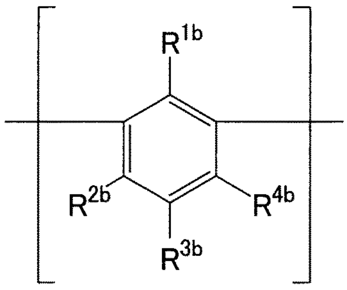

(B1)

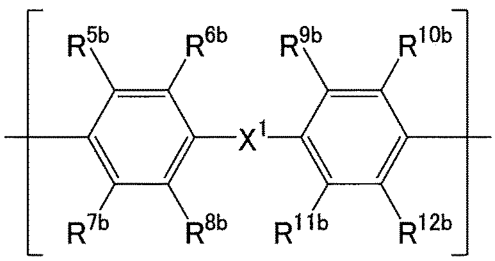

(B2)

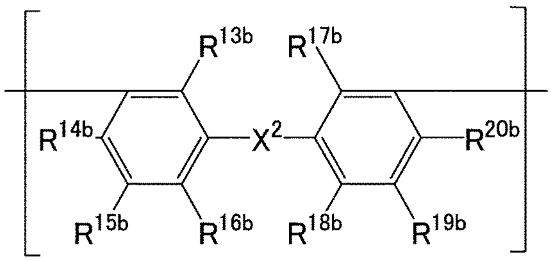

(B3)

where in the formula (B1), $R^{1b}$ to $R^{4b}$ are each independently a hydrogen atom or an optional substituent; and at least one selected from the group consisting of $R^{1b}$ to $R^{4b}$ is a group including the functional group F,
in the formula (B2), $R^{5b}$ to $R^{12b}$ are each independently a hydrogen atom or an optional substituent, and $X^1$ is a single bond or an optional linking group; and at least one selected from the group consisting of $R^{5b}$ to $R^{12b}$ is a group including the functional group F, and
in the formula (B3), $R^{13b}$ to $R^{20b}$ are each independently a hydrogen atom or an optional substituent, and $X^2$ is a single bond or an optional linking group; and at least one selected from the group consisting of $R^{13b}$ to $R^{20b}$ is a group including the functional group F.

**9.** The separation functional layer according to claim 5, wherein the polyimide P further includes a structural unit B2 derived from diamine b2 having a sulfonyl group.

**10.** The separation functional layer according to claim 9, wherein the structural unit B2 is represented by formula (C1) below:

[Chemical Formula 2]

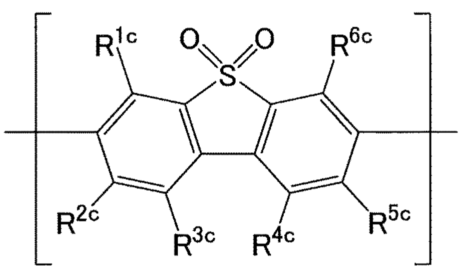

(C1)

where in the formula (C1), $R^{1c}$ to $R^{6c}$ are each independently a hydrogen atom or an optional substituent.

**11.** The separation functional layer according to claim 1, wherein the tetracarboxylic dianhydride a1 has a fused ring.

**12.** The separation functional layer according to claim 1, wherein the structural unit A1 is represented by formula (A1) below:

[Chemical Formula 3]

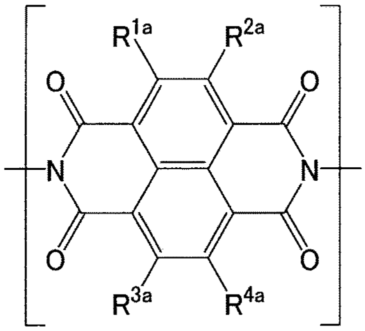

(A1)

where in the formula (A1), $R^{1a}$ to $R^{4a}$ are each independently a hydrogen atom or an optional substituent.

**13.** The separation functional layer according to claim 1, wherein

when a gas mixture composed of carbon dioxide and methane is supplied to a space adjacent to one surface of the separation functional layer while a space adjacent to another surface of the separation functional layer is decompressed, a permeation coefficient of carbon dioxide permeating through the separation functional layer is 1000 Barrer or more, and
a concentration of the carbon dioxide in the gas mixture is 50 vol% under a standard condition, the gas mixture supplied to the space adjacent to the one surface has a temperature of 30°C and a pressure of 0.1 MPa, and the space adjacent to the other surface is decompressed in such a manner that a pressure in the space is lower than an atmospheric pressure in a measurement environment by 0.1 MPa.

**14.** The separation functional layer according to claim 1, wherein

when a gas mixture composed of carbon dioxide and methane is supplied to a space adjacent to one surface of the separation functional layer while a space adjacent to another surface of the separation functional layer is decompressed, a separation factor $\alpha$ of the separation functional layer for carbon dioxide with respect to methane is 30 or more, and
a concentration of the carbon dioxide in the gas mixture is 50 vol% under a standard condition, the gas mixture supplied to the space adjacent to the one surface has a temperature of 30°C and a pressure of 0.1 MPa, and the space adjacent to the other surface is decompressed in such a manner that a pressure in the space is lower than an atmospheric pressure in a measurement environment by 0.1 MPa.

**15.** The separation functional layer according to claim 1, being for use in separating carbon dioxide from a gas mixture containing carbon dioxide and at least one selected from the group consisting of methane and nitrogen.

**16.** A separation membrane comprising:

the separation functional layer according to any one of claims 1 to 15; and
a porous support member supporting the separation functional layer.

**17.** A method for manufacturing a separation functional layer including polyimide P, comprising

forming the separation functional layer by applying a coating liquid containing a material of the separation functional layer onto a base material and drying the coating liquid, wherein
the polyimide P includes a structural unit A1 derived from a tetracarboxylic dianhydride a1 having a six-membered ring acid anhydride structure, and a structural unit B1 derived from diamine b1, and
at least one of the structural unit A1 and the structural unit B1 has at least one functional group F selected from

the group consisting of a carboxyl group, a hydroxyl group, a thiol group, and metal salts of these groups.

**18.** The manufacturing method according to claim 17, wherein at least one of the structural unit A1 and the structural unit B1 has the metal salt.

**19.** The manufacturing method according to claim 18, wherein the coating liquid contains, as the material of the separation functional layer, polyimide Q having at least one functional group f selected from the group consisting of a carboxyl group, a hydroxyl group, and a thiol group, and a compound having a metal, and
the polyimide P is formed from the polyimide Q at the time of forming the separation functional layer.

**20.** The manufacturing method according to claim 19, wherein the compound includes a metal complex having the metal and a ligand coordinated with the metal.

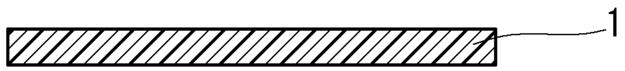


FIG.1

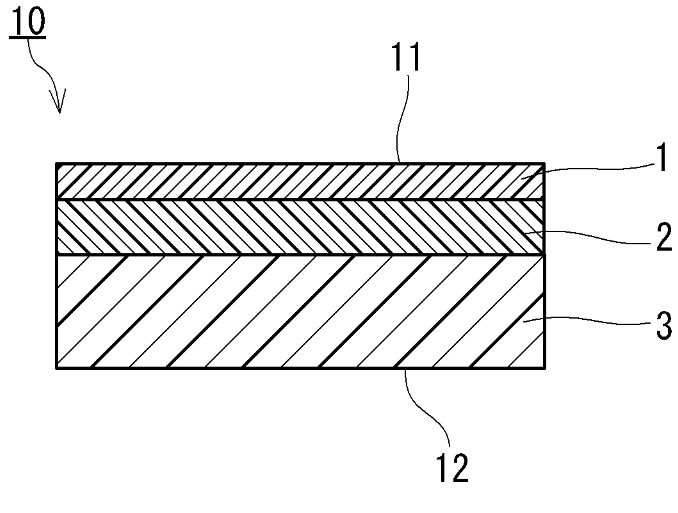


FIG.2

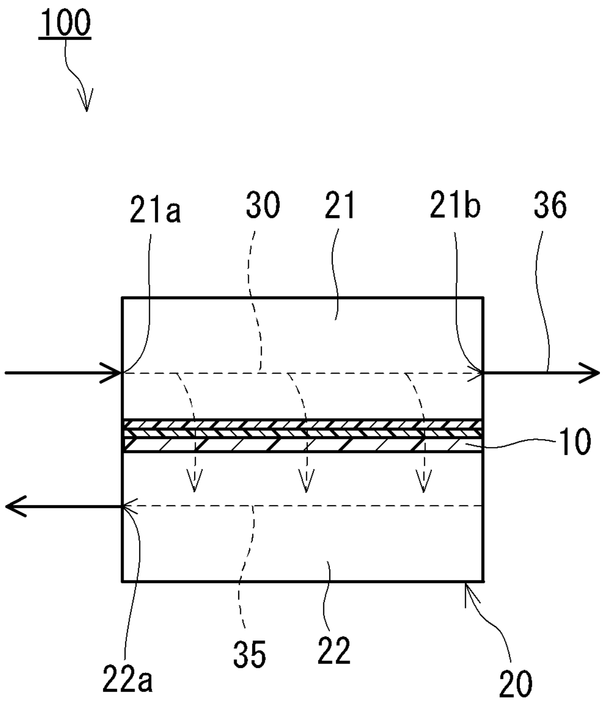


FIG.3

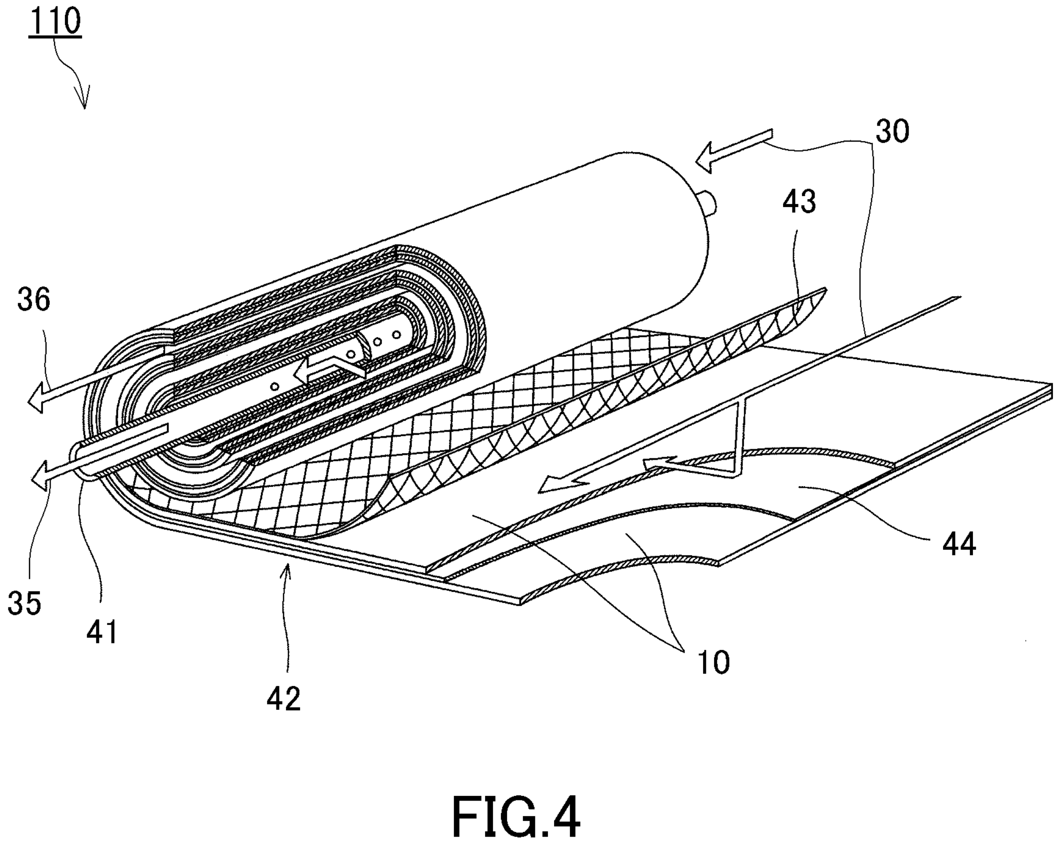


FIG.4

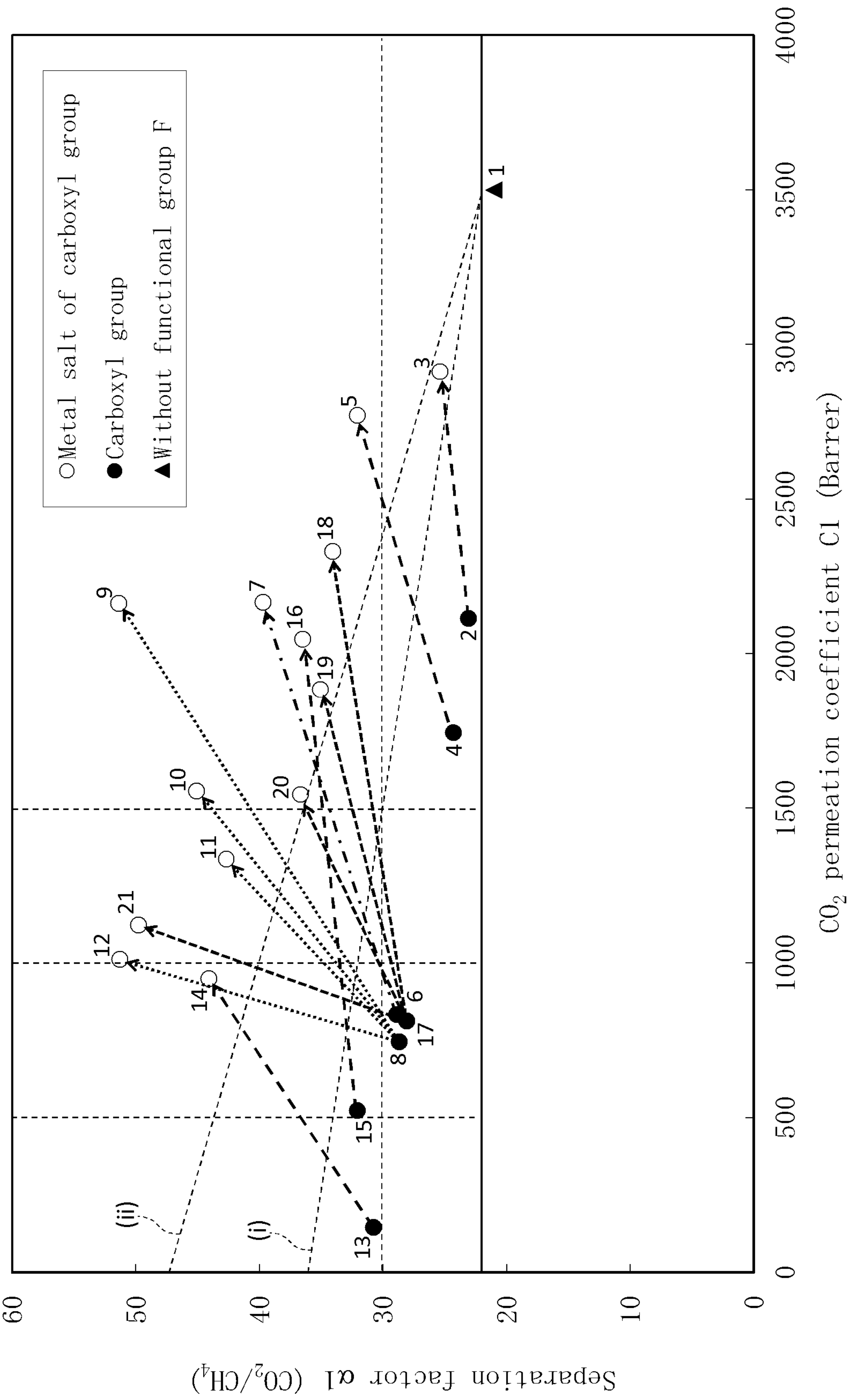
○Metal salt of carboxyl group
●Carboxyl group
▲Without functional group F
$CO_2$ permeation coefficient C1 (Barrer)
Separation factor α1 ($CO_2/CH_4$)
(i)
(ii)

FIG.5

## INTERNATIONAL SEARCH REPORT

International application No.
**PCT/JP2022/045199**

**A. CLASSIFICATION OF SUBJECT MATTER**

***B01D 71/64***(2006.01)i; ***B01D 53/22***(2006.01)i; ***B01D 69/12***(2006.01)i
FI: B01D71/64; B01D53/22; B01D69/12

According to International Patent Classification (IPC) or to both national classification and IPC

**B. FIELDS SEARCHED**

Minimum documentation searched (classification system followed by classification symbols)

B01D71/64; B01D53/22; B01D69/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-084155 A (DAIKIN INDUSTRIES, LTD.) 04 June 2020 (2020-06-04) | 1-20 |
| A | JP 2003-236352 A (UBE INDUSTRIES, LTD.) 26 August 2003 (2003-08-26) | 1-20 |
| A | CN 108043232 A (SHANGHAI JIAO TONG UNIVERSITY) 18 May 2018 (2018-05-18) | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 January 2023** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/045199**

| Patent document cited in search report | | | Publication date (day/month/year) | Patent family member(s) | Publication date (day/month/year) |
|---|---|---|---|---|---|
| JP | 2020-084155 | A | 04 June 2020 | (Family: none) | |
| JP | 2003-236352 | A | 26 August 2003 | (Family: none) | |
| CN | 108043232 | A | 18 May 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014184424 A
- JP 2010222228 A